# FASCICULE DE BREVET EUROPEEN

(11) **EP 3 870 795 B1**
(45) Date de publication et mention de la délivrance du brevet: **17.05.2023**
(21) Numéro de dépôt: 19794542.1
(22) Date de dépôt: 25.10.2019
(51) Int. Cl.: E06B 9/72

(54) **ACTIONNEUR DOMOTIQUE ÉLECTROMÉCANIQUE**
ELEKTROMECHANISCHER DOMOTIK-AKTUATOR
ELECTROMECHANICAL HOME-AUTOMATION ACTUATOR

(30) Priorité: 25.10.2018 FR 1859886; 21.12.2018 FR 1874064
(43) Date de publication de la demande: 01.09.2021
(73) Titulaire: Somfy Activites SA, 74300 Cluses (FR)
(72) Inventeur: LAGARDE, Eric, 74700 Sallanches (FR); ROBERT, Héléna, 74300 Magland (FR); MOHAMED, Dylan, 74300 Cluses (FR)
(74) Mandataire: Novaimo
(86) Numéro de dépôt international: PCT/EP2019/079196
(87) Numéro de publication internationale: WO 2020/084118

(56) Documents cités:
- EP-A1- 0 531 079
- EP-A1- 3 358 121
- WO-A1-2013/007642

## Description

L'invention concerne un actionneur électromécanique pour installation de fermeture, d'occultation ou de protection solaire, notamment un actionneur comprenant un joint d'Oldham. L'invention concerne aussi une installation comprenant un tel actionneur électromécanique.

De manière générale, la présente invention concerne le domaine des installations de fermeture, d'occultation ou de protection solaire comprenant un dispositif d'entraînement motorisé mettant en mouvement un écran, entre au moins une première position et au moins une deuxième position.

Un dispositif d'entraînement motorisé comprend un actionneur électromécanique d'un élément mobile de fermeture, d'occultation ou de protection solaire tel qu'un volet, une porte, une grille, un store ou tout autre matériel équivalent, appelé par la suite « écran ».

L'actionneur électromécanique est destiné à être monté à l'intérieur d'un tube d'enroulement sur lequel est enroulé l'écran. En outre, l'actionneur électromécanique comprend au moins un moteur électrique et un réducteur. Le moteur électrique et le réducteur génèrent des vibrations, lors du fonctionnement de l'actionneur électromécanique. Ces vibrations sont transmises aux éléments entourant le moteur électrique, notamment à un carter de l'actionneur électromécanique, au tube d'enroulement et à la structure supportant l'actionneur.

Par conséquent, lors de la mise en fonctionnement de l'actionneur électromécanique et dans une configuration assemblée de l'actionneur électromécanique dans l'installation, l'actionneur électromécanique engendre du bruit.

On connaît déjà le document EP 0 531 079 A1 qui décrit un actionneur électromécanique pour installation de fermeture, d'occultation ou de protection solaire, l'actionneur électromécanique comprenant un ensemble moteur, comprenant un moteur électrique et un réducteur, un premier module mécanique de filtrage de vibrations, un deuxième module mécanique de filtrage de vibrations et un arbre de sortie, insérés au moins partiellement dans un carter de l'actionneur électromécanique, l'actionneur électromécanique s'étendant suivant un axe longitudinal, le premier et le deuxième modules mécaniques de filtrage de vibrations étant disposés de part et d'autre de l'ensemble moteur le long de l'axe longitudinal et comprenant chacun un accouplement de transmission. Ce document décrit des amortisseurs de vibrations montés de part et d'autre d'un moteur d'entraînement d'un tube d'enroulement pour une installation de fermeture ou de protection solaire. Ces amortisseurs de vibrations comprennent une pièce de couplage élastique ou disque caoutchouc, par exemple en néoprène. Des arbres de transmissions se montent de part et d'autre de cette pièce élastique. Ainsi, le couple est transmis au travers de la pièce de couplage élastique, en sollicitant celle-ci.

Les matériaux élastiques formant ces liaisons de transmission de couple sont soumises à différents phénomènes qui peuvent altérer leur comportement dans le temps, par exemple :
- l'accommodation du matériau ou assouplissement après plusieurs cycles,
- le raidissage dû à la fréquence de sollicitation (notamment dans le cas de vibrations),
- l'échauffement interne du matériau,
- le fluage ou relaxation de la structure : le comportement visqueux des élastomères entraîne une perte de rigidité du matériau sous l'application d'une charge statique,
- la fatigue du matériau due à des sollicitations cycliques.

Une des problématiques particulières pour des actionneurs d'installation de protection solaire utilisant des accouplements utilisant des pièces élastiques est celui du fluage ou relaxation. Dans le temps, en effet, il peut y avoir une déformation de ces accouplements qui conduit à un décalage en position angulaire. Ces décalages peuvent atteindre des valeurs importantes qui conduisent à un décalage perceptible visuellement entre deux écrans de protection solaire placés côte à côte sur une façade.

Le but de l'invention est de fournir un actionneur remédiant aux inconvénients mentionnés et améliorant les actionneurs connus de l'art antérieur. En particulier, l'invention propose un actionneur simple, limitant la transmission des vibrations du moteur à la structure le supportant et supprimant les problématiques de fluage. Selon un premier aspect de l'invention, un actionneur électromécanique pour installation de fermeture, d'occultation ou de protection solaire comprend un ensemble moteur, comprenant un moteur électrique et un réducteur, un premier module mécanique de filtrage de vibrations, un deuxième module mécanique de filtrage de vibrations et un arbre de sortie, insérés au moins partiellement dans un carter de l'actionneur électromécanique, l'actionneur électromécanique s'étendant suivant un axe longitudinal, le premier et le deuxième modules mécaniques de filtrage de vibrations étant disposés de part et d'autre de l'ensemble moteur le long de l'axe longitudinal et comprenant chacun un accouplement de transmission rigide, disposant d'au moins un premier degré de liberté perpendiculairement à l'axe longitudinal de l'actionneur électromécanique, autorisant un déplacement de l'ensemble moteur suivant un plan perpendiculaire à l'axe longitudinal de l'actionneur électromécanique, l'actionneur électromécanique comprenant en outre au moins un module élastique limitant le déplacement de l'ensemble moteur suivant le plan perpendiculaire à l'axe longitudinal de l'actionneur électromécanique.

Le module élastique limite le déplacement de l'ensemble moteur relativement au carter suivant le plan perpendiculaire à l'axe longitudinal de l'actionneur induit par le premier degré de liberté du premier et du deuxième module mécanique de filtrage de vibrations, perpendiculairement à l'axe longitudinal de l'actionneur. En effet, du fait des faibles écarts de diamètres de l'ensemble moteur et du carter, il est important d'éviter que l'ensemble moteur, sous l'effet de son propre poids, ne se retrouve en contact avec le carter de l'actionneur.

Selon un mode de réalisation avantageux, le premier module mécanique de filtrage de vibrations comprend une première pièce d'entrée liée mécaniquement directement ou indirectement à un support de couple, en particulier liée au carter, une première pièce de sortie liée mécaniquement directement ou indirectement à l'ensemble moteur et une première pièce intermédiaire liée d'une part à la première pièce d'entrée et d'autre part à la première pièce de sortie et disposant d'au moins un degré de liberté en translation suivant une direction perpendiculaire à l'axe longitudinal par rapport à la première pièce d'entrée et disposant d'au moins un degré de liberté en translation suivant une direction perpendiculaire à l'axe longitudinal par rapport à la première pièce de sortie. De même, le deuxième module mécanique de filtrage de vibrations comprend une deuxième pièce d'entrée liée mécaniquement directement ou indirectement à un support de couple, en particulier liée au carter, une deuxième pièce de sortie liée mécaniquement directement ou indirectement à l'ensemble moteur et une deuxième pièce intermédiaire liée d'une part à la deuxième pièce d'entrée et d'autre part à la deuxième pièce de sortie et disposant d'au moins un degré de liberté en translation suivant une direction perpendiculaire à l'axe longitudinal par rapport à la deuxième pièce d'entrée et disposant d'au moins un degré de liberté en translation suivant une direction perpendiculaire à l'axe longitudinal par rapport à la deuxième pièce de sortie.

Le premier module mécanique de filtrage de vibrations assure ainsi la liaison mécanique entre le support de couple, via le carter, et l'ensemble moteur. Le deuxième module mécanique de filtrage de vibrations assure la liaison mécanique entre l'ensemble moteur et l'arbre de sortie de l'actionneur. Ainsi, l'actionneur selon l'invention utilise la capacité de coupure au moins des vibrations radiales de l'accouplement de transmission rigide à au moins un degré de liberté pour réaliser un filtre vibro-acoustique rigide en torsion et évite l'utilisation d'éléments élastiques en torsion.

Avantageusement, la première pièce de sortie du premier module mécanique de filtrage de vibrations comprend une interface externe, comprenant des cannelures externes, adaptée à être connectée à l'ensemble moteur.

Avantageusement, la deuxième pièce d'entrée du deuxième module mécanique de filtrage de vibrations comprend une interface interne, munie de nervures internes, adaptée à être connectée à un arbre de sortie de l'ensemble moteur.

Selon un mode de réalisation avantageux, les première et deuxième pièces intermédiaires du premier module mécanique de filtrage de vibrations et du deuxième module mécanique de filtrage de vibrations sont identiques.

Selon un mode de réalisation avantageux, la première pièce de sortie du premier module mécanique de filtrage de vibrations est identique à la deuxième pièce d'entrée du deuxième module mécanique de filtrage de vibrations.

Avantageusement, l'accouplement de transmission rigide du premier et/ou du deuxième module mécanique de filtrage de vibrations comprend un deuxième degré de liberté parallèlement à l'axe longitudinal de l'actionneur.

Ceci permet notamment aux différentes pièces en mouvement suivant le premier degré de liberté, de pouvoir librement se déplacer les unes par rapport aux autres et assurer leur fonction de filtrage de vibrations.

Selon un mode de réalisation avantageux, le premier et/ou le deuxième module mécanique de filtrage de vibrations comprend un joint d'Oldham ou un joint de Schmidt ou un accouplement à tripodes.

Avantageusement, le premier module mécanique de filtrage de vibrations est creux. Ceci permet notamment le passage de câbles d'alimentation du moteur au travers du premier module mécanique de filtrage de vibrations.

Selon un mode de réalisation avantageux, le module élastique comprend une bague ou un anneau en matériau souple, notamment en matériau élastomère et/ou viscoélastique, disposé autour de l'ensemble moteur.

Le module élastique limite le déplacement radial possible de l'ensemble moteur par rapport à l'axe longitudinal de l'actionneur électromécanique, sans toutefois être sollicité en torsion.

Avantageusement, le module élastique comprend des bossages formant sa ou ses surfaces en contact avec le carter et/ou l'ensemble moteur.

Avantageusement, le premier module mécanique de filtrage de vibrations comprend au moins un élément de fixation au carter, notamment au moins une nervure et/ou au moins une cavité.

L'invention concerne également une installation domotique de fermeture, d'occultation ou de protection solaire comprenant un écran, un tube d'enroulement et un actionneur électromécanique, l'écran étant enroulable sur le tube d'enroulement entraîné en rotation par l'actionneur électromécanique, l'actionneur électromécanique comprenant un ensemble moteur, comprenant un moteur électrique et un réducteur, un premier module mécanique de filtrage de vibrations, un deuxième module mécanique de filtrage de vibrations et un arbre de sortie, insérés au moins partiellement dans un carter de l'actionneur électromécanique, l'actionneur électromécanique s'étendant suivant un axe longitudinal, le premier et le deuxième modules mécaniques de filtrage de vibrations étant disposés de part et d'autre de l'ensemble moteur le long de l'axe longitudinal et comprenant chacun un accouplement de transmission rigide, disposant d'au moins un premier degré de liberté perpendiculairement à l'axe longitudinal de l'actionneur électromécanique, autorisant un déplacement de l'ensemble moteur suivant un plan perpendiculaire à l'axe longitudinal de l'actionneur électromécanique, l'actionneur électromécanique comprenant en outre au moins un module élastique limitant le déplacement de l'ensemble moteur suivant le plan perpendiculaire à l'axe longitudinal de l'actionneur électromécanique.

L'actionneur selon l'invention est défini par la revendication 1.

Différents modes de réalisation d'un actionneur sont définis par les revendications 2 à 11.

Selon cet autre aspect, une installation selon l'invention est définie par la revendication 12.

L'invention sera mieux comprise à la lecture de la description qui va suivre, donnée uniquement à titre d'exemple et faite en se référant aux dessins annexés sur lesquels :
La figure 1 est une vue schématique en coupe transversale d'une installation conforme selon un mode de réalisation ;
La figure 2 est une vue schématique en perspective de l'installation illustrée à la figure 1 ;
La figure 3 est une vue partielle d'un mode de réalisation d'un actionneur électromécanique de l'installation illustrée aux figures 1 et 2 ;
La figure 4 est une vue en coupe longitudinale d'un mode de réalisation de l'actionneur électromécanique illustré sur la figure 3 ;
La figure 5 est une vue éclatée suivant une première perspective d'un mode de réalisation d'un premier module mécanique de filtrage de vibration de l'actionneur électromécanique illustré aux figures 3 et 4 ;
La figure 6 est une vue éclatée suivant une deuxième perspective du premier module mécanique de filtrage de vibration illustré à la figure 5 ;
La figure 7 est une vue éclatée suivant une première perspective d'un mode de réalisation d'un deuxième module mécanique de filtrage de vibration de l'actionneur électromécanique illustré aux figures 3 et 4 ;
La figure 8 est une vue schématique d'un actionneur électromécanique de l'installation illustrée aux figures 1 et 2 suivant un deuxième mode de réalisation ;
La figure 9 est une autre vue assemblée en perspective du premier module mécanique de filtrage de vibration illustré sur les figures 5 et 6;
La figure 10 est une vue éclatée en perspective du premier module mécanique de filtrage de vibration illustré sur les figures 5 et 6;
La figure 11 est une vue assemblée en perspective du deuxième module mécanique de filtrage de vibration illustré sur la figure 7 ;
La figure 12 est une vue partielle en coupe d'un autre mode de réalisation d'un actionneur électromécanique ;
La figure 13 est une autre vue en perspective éclatée de cet autre mode de réalisation.

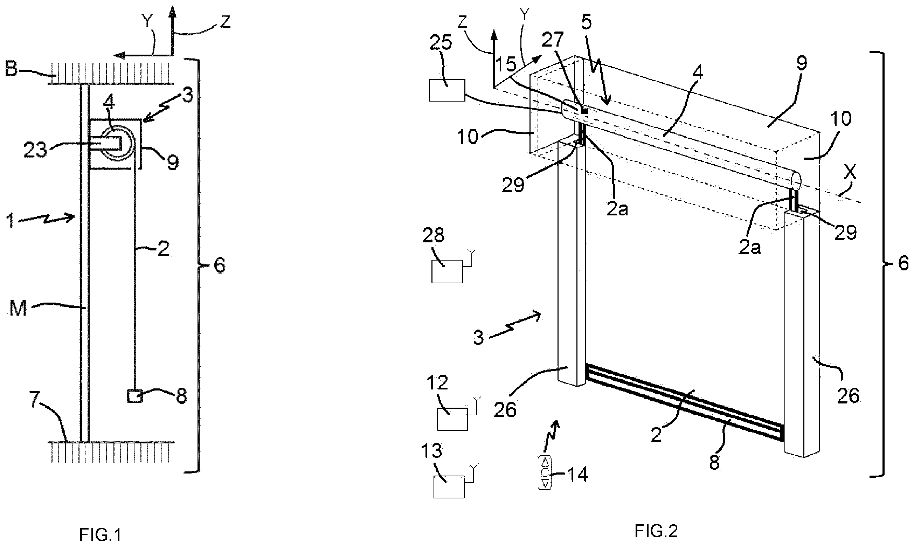

On décrit tout d'abord, en référence aux figures 1 et 2, un mode de réalisation d'une installation 6. Cette installation équipe un bâtiment B comprenant une ouverture 1, notamment une fenêtre ou une porte. L'installation 6 comprend un dispositif 3 de fermeture, d'occultation 3 ou de protection solaire, en particulier un store motorisé. Le dispositif 3 comprend un écran 2.

Le dispositif 3 peut être un store, notamment une toile, enroulable, un store plissé ou à lames. Le dispositif 3 peut également être un volet roulant ou encore un portail roulant. Le dispositif 3 peut encore être de tout autre type.

On décrit en outre, en référence aux figures 1 et 2, un mode de réalisation du dispositif 3 sous la forme d'un store motorisé enroulable 3.

Le dispositif 3 comprend un tube d'enroulement 4 et un dispositif d'entraînement motorisé 5 comprenant un actionneur électromécanique 11.

L'écran 2 du dispositif 3 est enroulé sur le tube d'enroulement 4 entraîné par le dispositif d'entraînement motorisé 5. Ainsi, l'écran est mobile entre une position enroulée, en particulier une position haute, et une position déroulée, en particulier une position basse.

L'écran 2 du dispositif 3 est un écran de fermeture, d'occultation et/ou de protection solaire, s'enroulant et se déroulant autour du tube d'enroulement 4, dont le diamètre intérieur est sensiblement supérieur au diamètre externe de l'actionneur électromécanique 11, de sorte que l'actionneur électromécanique 11 puisse être inséré dans le tube d'enroulement 4, lors de l'assemblage du dispositif 3.

Le dispositif 3 comprend un dispositif de maintien 9, 23. Par exemple, le dispositif de maintien 9, 23 peut comprendre deux accessoires 23. Un accessoire 23 est disposé à chaque extrémité du tube d'enroulement 4, dans une configuration assemblée du dispositif 3. Ainsi, le tube d'enroulement 4 est maintenu par l'intermédiaire des accessoires 23. Un seul des accessoires 23 est représenté sur la figure 1. Les accessoires 23 permettent de lier mécaniquement le dispositif 3 à la structure du bâtiment B, notamment à un mur M du bâtiment B. Le dispositif de maintien 9, 23 peut comprendre un caisson 9. En outre, le tube d'enroulement 4 et au moins une partie de l'écran 2 sont logés à l'intérieur du caisson 9, dans la configuration assemblée du dispositif 3. De manière générale, le caisson 9 est disposé au-dessus de l'ouverture 1, ou encore en partie supérieure de l'ouverture 1. Comme illustré sur la figure 1, les accessoires 23 sont de préférence également logés à l'intérieur du caisson 9. En variante, représentée sur la figure 2, le tube d'enroulement 4 est maintenu par l'intermédiaire du caisson 9, en particulier par l'intermédiaire de joues 10 du caisson 9.

Le dispositif 3 peut également comprendre deux coulisses latérales 26, comme illustré à la figure 2. Chaque coulisse latérale 26 comprend une gorge 29. Chaque gorge 29 de l'une des coulisses latérales 26 coopère, autrement dit est configurée pour coopérer, avec un bord latéral 2a de l'écran 2, dans la configuration assemblée du dispositif 3, de sorte à guider l'écran 2, lors de l'enroulement et du déroulement de l'écran 2 autour du tube d'enroulement 4.

L'actionneur électromécanique 11 est par exemple de type tubulaire. Il permet de mettre en rotation le tube d'enroulement 4 autour de son axe longitudinal X de sorte à dérouler ou à enrouler l'écran 2 du dispositif 3. Dans l'état monté, l'actionneur électromécanique 11 est inséré dans le tube d'enroulement 4.

Le dispositif 3 comprend également une barre de charge 8 pour exercer une tension sur l'écran 2, par exemple pour exercer un poids sur l'écran 2.

Le store enroulable, qui forme le dispositif 3, comprend une toile, formant l'écran 2 du store enroulable 3. Une première extrémité de l'écran 2, en particulier l'extrémité supérieure de l'écran 2, dans la configuration assemblée du dispositif 3, est fixée au tube d'enroulement 4. En outre, une deuxième extrémité de l'écran 2, en particulier l'extrémité inférieure de l'écran 2, dans la configuration assemblée du dispositif 3, est fixée à la barre de charge 8. Par exemple, la toile formant l'écran 2 est réalisée à partir d'un matériau textile. Dans un exemple de réalisation, non représenté, la première extrémité de l'écran 2 présente un ourlet au travers duquel est disposée une tige, en particulier en matière plastique. Cet ourlet réalisé au niveau de la première extrémité de l'écran 2 est obtenu au moyen d'une couture de la toile formant l'écran 2. Lors de l'assemblage de l'écran 2 sur le tube d'enroulement 4, l'ourlet et la tige situés au niveau de la première extrémité de l'écran 2 sont insérés par coulissement dans une rainure ménagée sur la face externe du tube d'enroulement 4, en particulier sur toute la longueur du tube d'enroulement 4, de sorte à pouvoir enrouler et dérouler l'écran 2 autour du tube d'enroulement 4.

Dans le cas d'un store enroulable, la position haute enroulée correspond à une position de fin de course haute prédéterminée, ou encore à la mise en appui de la barre de charge 8 de l'écran 2 contre un bord d'un caisson 9 du store enroulable 3, et la position basse déroulée correspond à une position de fin de course basse prédéterminée, ou à la mise en appui de la barre de charge 8 de l'écran 2 contre un seuil 7 de l'ouverture 1, ou encore au déroulement complet de l'écran 2.

Avantageusement, le dispositif d'entraînement motorisé 5 est commandé par une unité de commande. L'unité de commande peut être, par exemple, une unité de commande locale 12 ou une unité de commande centrale 13.

Avantageusement, l'unité de commande locale 12 peut être reliée par liaison filaire ou non filaire avec l'unité de commande centrale 13.

Avantageusement, l'unité de commande centrale 13 peut piloter l'unité de commande locale 12, ainsi que d'autres unités de commande locales similaires et réparties dans le bâtiment.

Avantageusement, l'unité de commande centrale 13 peut être en communication avec une station météorologique disposée à l'intérieur du bâtiment B ou déportée à l'extérieur du bâtiment B, incluant, notamment un ou plusieurs capteurs pouvant être configurés pour déterminer, par exemple, une température, une luminosité, ou encore une vitesse de vent, dans le cas où la station météorologique est déportée à l'extérieur du bâtiment B.

Une télécommande 14, pouvant être un type d'unité de commande locale, et pourvue d'un clavier de commande, qui comprend des éléments de sélection et d'affichage, permet, en outre, à un utilisateur d'intervenir sur l'actionneur électromécanique 11 et/ou l'unité de commande centrale 13.

Le dispositif d'entraînement motorisé 5 est, de préférence, configuré pour exécuter les commandes de déroulement ou d'enroulement de l'écran 2 du dispositif 3, pouvant être émises, notamment, par l'unité de commande locale 12, l'unité de commande centrale 13 ou la télécommande 14.

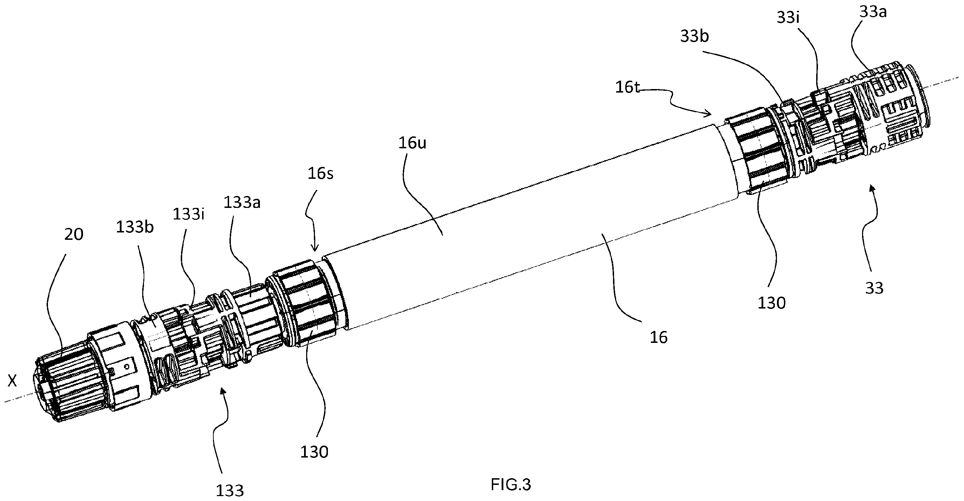

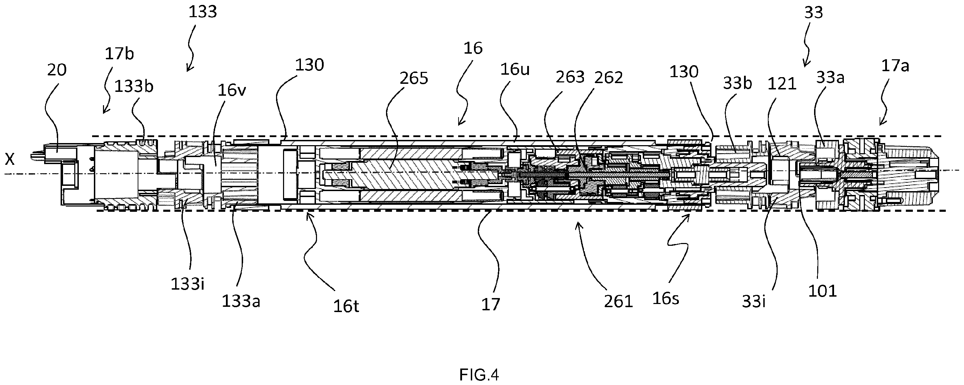

On décrit à présent, plus en détail et en référence aux figures 3 et 4, un mode de réalisation de l'actionneur électromécanique 11 des figures 1 et 2.

L'actionneur électromécanique 11 comprend un ensemble moteur 16, comprenant un moteur électrique 261. Le moteur électrique comprend un rotor 262 et un stator 263, positionnés de manière coaxiale autour d'un axe longitudinal X, qui est également l'axe de rotation du tube d'enroulement 4 en configuration montée du dispositif d'entraînement motorisé 5. L'ensemble moteur comprend également un réducteur 265. Avantageusement, le réducteur 265 comprend au moins un étage de réduction. L'étage de réduction peut être un train d'engrenages de type épicycloïdal. Le type et le nombre d'étages de réduction du réducteur ne sont pas limitatifs. L'ensemble moteur comprend également un tube 16u dans lequel sont logés le moteur électrique 261 et le réducteur 265.

Avantageusement, l'actionneur électromécanique 11 comprend également un frein non représenté. A titre d'exemples nullement limitatifs, le frein peut être un frein à ressort, un frein à came ou un frein magnétique ou électromagnétique. Le frein peut également faire partie de l'ensemble moteur 16 et être logé dans le tube 16u de l'ensemble moteur 16.

Avantageusement, l'ensemble moteur et éventuellement le frein sont disposés à l'intérieur d'un carter 17 de l'actionneur électromécanique 11, le carter 17 étant représenté de manière schématique en pointillés sur la figure 4. Le carter 17 ou boîtier de l'actionneur électromécanique 11 est de forme cylindrique, notamment de révolution. Dans un exemple de réalisation, le carter 17 est réalisé dans un matériau métallique, mais la matière du carter de l'actionneur électromécanique n'est pas limitative et peut être différente. Il peut s'agir, en particulier, d'une matière plastique.

Avantageusement, l'actionneur électromécanique 11 comprend un arbre de sortie 20, entraîné en rotation par l'ensemble moteur 16.

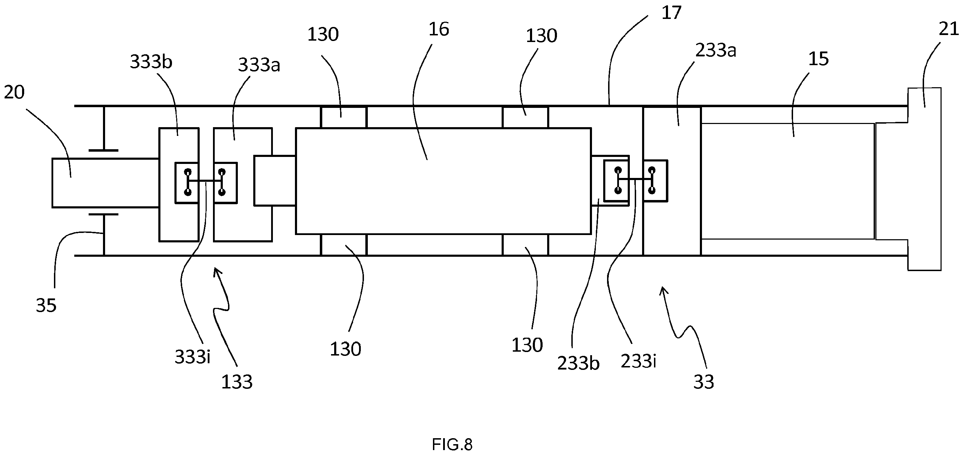

Des moyens de commande de l'actionneur électromécanique 11, permettant le déplacement de l'écran 2 du dispositif 3, comprennent au moins une unité électronique de contrôle 15, représentée schématiquement sur la figure 8. Cette unité électronique de contrôle 15 est apte à mettre en fonctionnement l'ensemble moteur 16 de l'actionneur électromécanique 11, et, en particulier, permettre l'alimentation en énergie électrique du moteur électrique 261 de l'ensemble moteur 16.

Ainsi, l'unité électronique de contrôle 15 commande notamment l'alimentation du moteur électrique de l'ensemble moteur 16, de sorte à ouvrir, notamment enrouler, ou fermer, notamment dérouler, l'écran 2, comme décrit précédemment.

L'unité électronique de contrôle 15 comprend également un module de communication 27, comme illustré sur la figure 2, en particulier de réception d'ordres de commande. Les ordres de commande sont émis par un émetteur d'ordres, tel que la télécommande 14 destinée à commander l'actionneur électromécanique 11 ou l'une des unités de commande locale 12 ou centrale 13.

Préférentiellement, le module de communication 27 de l'unité électronique de contrôle 15 est de type sans fil. En particulier, le module de communication 27 est configuré pour recevoir des ordres de commande radioélectriques.

Le module de communication 27 peut également permettre la réception d'ordres de commande transmis par des moyens filaires.

L'unité de commande centrale 13, l'unité de commande locale 12 ou l'unité électronique de contrôle 15 peuvent également être en communication avec un serveur 28, tel qu'illustré sur la figure 2, de sorte à contrôler l'actionneur électromécanique 11 suivant des données mises à disposition à distance par l'intermédiaire d'un réseau de communication, en particulier un réseau internet pouvant être relié au serveur 28.

Les moyens de commande de l'actionneur électromécanique 11 comprennent des moyens matériels et/ou logiciels. A titre d'exemple nullement limitatif, les moyens matériels peuvent comprendre au moins un microcontrôleur, configuré pour gérer le fonctionnement de l'unité de contrôle et le fonctionnement du moteur électrique. Avantageusement, l'unité électronique de contrôle 15 est configurée pour contrôler le moteur électrique de l'ensemble moteur 16. L'unité électronique de contrôle 15 peut ainsi comprendre une carte électronique, qui peut notamment supporter un ou plusieurs boutons poussoirs, une ou plusieurs diodes électroluminescentes, ainsi que par exemple des contacts entrée-sortie de programmation. L'actionneur électromécanique 11 peut également comprendre un dispositif de détection de fin de course et/ou d'obstacle, pouvant être mécanique ou électronique.

Avantageusement, l'actionneur électromécanique 11 est alimenté en énergie électrique. L'actionneur électromécanique 11 comprend un câble d'alimentation électrique permettant son alimentation en énergie électrique, à partir d'une source externe telle que l'alimentation du secteur ou à partir d'une batterie ou d'un chargeur. Avantageusement, l'unité électronique de contrôle 15 et le moteur 16 peuvent être alimentés en énergie électrique au moyen du câble d'alimentation électrique 18. Alternativement, l'actionneur électromécanique 11 intègre une batterie, remplaçable ou rechargeable par le biais du câble électrique.

Avantageusement, l'actionneur électromécanique 11 comprend un support de couple 21 (ou tête d'actionneur) représenté schématiquement sur la figure 8. Le support de couple 21 est disposé au niveau d'une extrémité du carter 17 de l'actionneur électromécanique 11, dans une configuration assemblée de l'actionneur électromécanique 11. Le support de couple 21 permet de reprendre les efforts exercés par l'actionneur électromécanique 11 et d'assurer la reprise des efforts exercés par l'actionneur, en particulier le couple exercé par l'actionneur électromécanique 11, par la structure du bâtiment B. Le support de couple 21 permet avantageusement de reprendre en outre des efforts exercés par le tube d'enroulement, notamment le poids du tube d'enroulement, de l'actionneur électromécanique et de l'écran, et d'assurer la reprise de ces efforts par la structure du bâtiment B. Le support de couple 21 de l'actionneur électromécanique 11 peut également permettre d'obturer une extrémité du carter 17 de l'actionneur électromécanique 11. Par ailleurs, le support de couple 21 de l'actionneur électromécanique 11 peut permettre de supporter au moins une partie de l'unité électronique de contrôle.

Ainsi, le support de couple 21 de l'actionneur électromécanique 11 permet de fixer l'actionneur électromécanique 11 sur le dispositif de maintien 9, 23, en particulier à l'un des accessoires 23 ou à l'une des joues 10 du caisson 9.

Avantageusement, le support de couple 21 est en saillie au niveau de l'extrémité du carter 17 de l'actionneur électromécanique 11.

Le tube d'enroulement 4 du dispositif 3 est entraîné en rotation autour de l'axe de rotation X et du carter 17 de l'actionneur électromécanique 11 en étant soutenu par l'intermédiaire de deux liaisons pivot. La première liaison pivot est réalisée au niveau d'une première extrémité du tube d'enroulement 4 au moyen d'une couronne, non représentée, insérée autour d'une extrémité du carter 17 de l'actionneur électromécanique 11, à proximité du support de couple 21. La couronne permet ainsi de réaliser un palier. La deuxième liaison pivot, non représentée, est réalisée au niveau d'une deuxième extrémité du tube d'enroulement 4.

L'arbre de sortie 20 de l'actionneur électromécanique 11 est disposé au moins en partie à l'extérieur du carter 17 de l'actionneur électromécanique 11. Ici, une extrémité de l'arbre de sortie 20 est en saillie par rapport au carter 17 de l'actionneur électromécanique 11, en particulier par rapport à une deuxième extrémité 17b du carter 17 opposée à la première extrémité 17a. L'arbre de sortie 20 de l'actionneur électromécanique 11 est configuré pour entraîner en rotation un élément de liaison, non représenté, relié au tube d'enroulement 4. L'élément de liaison est réalisé sous la forme d'une roue. Lors de la mise en fonctionnement de l'actionneur électromécanique 11, l'ensemble moteur 16, notamment le moteur électrique et le réducteur, entraînent en rotation l'arbre de sortie 20. L'arbre de sortie 20 de l'actionneur électromécanique 11 entraîne en rotation le tube d'enroulement 4 par l'intermédiaire de l'élément de liaison. Ainsi, le tube d'enroulement 4 entraîne en rotation l'écran 2 du dispositif 3, de sorte à enrouler ou dérouler l'écran 2 et ainsi laisser libre ou obturer l'ouverture 1.

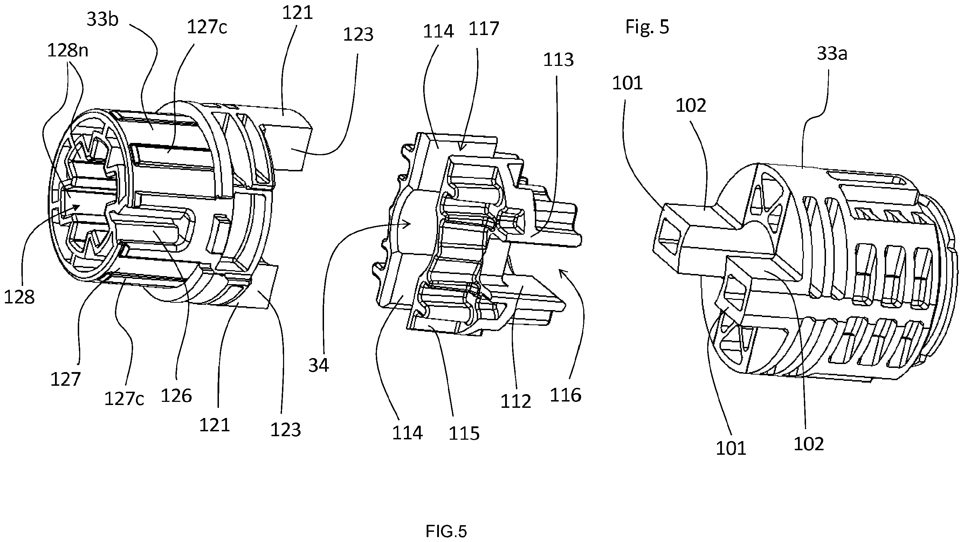

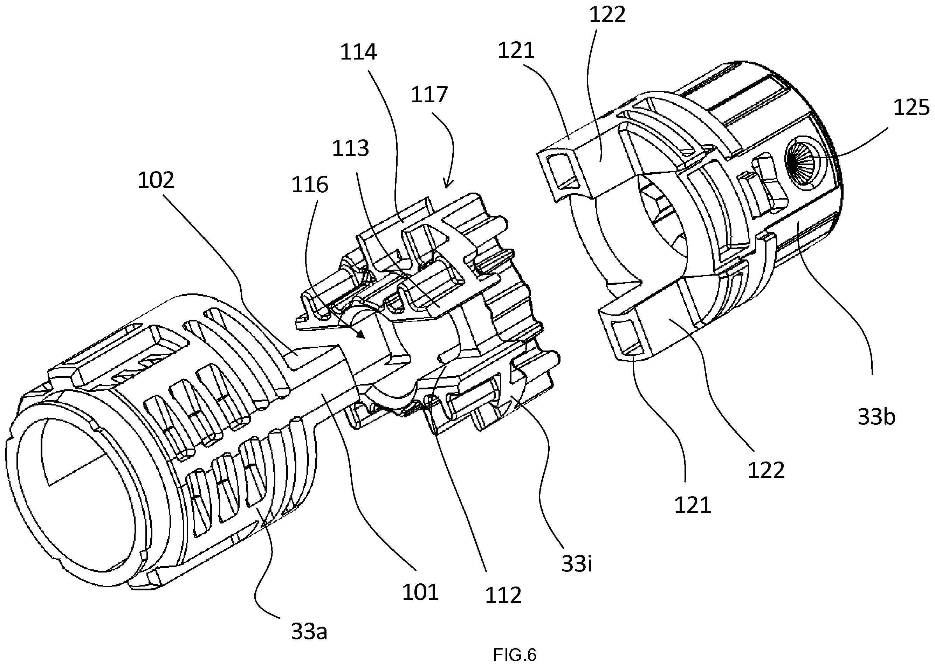

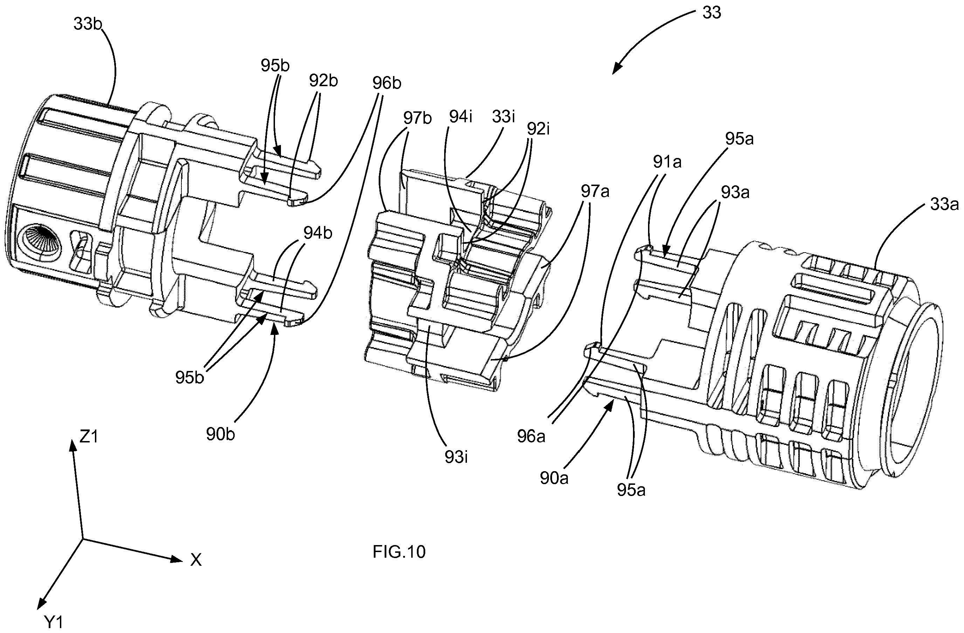

L'actionneur électromécanique 11 comprend, outre l'ensemble moteur 16, le support de couple 21 et le carter 17, un premier module mécanique de filtrage de vibrations 33 et un deuxième module de filtrage de vibrations 133. Le premier module mécanique de filtrage de vibrations 33 lie mécaniquement le support de couple 21, au travers du carter 17, et l'ensemble moteur 16 au moins en rotation autour de l'axe X de l'actionneur électromécanique. Pour cela, le premier module mécanique de filtrage de vibrations 33 comprend une pièce d'entrée 33a liée mécaniquement directement ou indirectement au carter, notamment en liaison complète ou tout au moins par une liaison interdisant la rotation autour de l'axe X. Le premier module mécanique de filtrage de vibrations 33 comprend une pièce de sortie 33b liée mécaniquement directement ou indirectement à l'ensemble moteur 16, notamment en liaison complète ou tout au moins par une liaison interdisant la rotation autour de l'axe X. Les pièces d'entrée 33a ou de sortie 33b peuvent être liées respectivement au carter ou à l'ensemble moteur 16 par un procédé de billage, c'est-à-dire par une déformation du carter, respectivement du tube 16u de l'ensemble moteur, en face d'un élément de fixation, tel qu'une cavité 125, représentée sur les figures 6 et 9 à 10 ou une nervure 126, visible à la figure 5, de sorte que le carter déformé coopère avec la cavité 125 pour bloquer en rotation et, de préférence aussi en translation, le mouvement de la pièce d'entrée 33a par rapport au carter 17 ou de la pièce de sortie 33b par rapport à l'ensemble moteur 16. Le premier module mécanique de filtrage de vibrations 33 comprend également une pièce intermédiaire 33i liée d'une part à la pièce d'entrée 33a et d'autre part à la pièce de sortie 33b. Ces pièces seront expliquées en détail ci-après.

Le deuxième module mécanique de filtrage de vibrations 133 comprend une pièce d'entrée 133a liée mécaniquement directement ou indirectement à l'ensemble moteur 16, notamment en liaison complète ou tout au moins par une liaison interdisant la rotation autour de l'axe X. Le deuxième module mécanique de filtrage de vibrations 133 comprend une pièce de sortie liée mécaniquement directement ou indirectement à l'arbre de sortie 20 de l'actionneur électromécanique 11 notamment en liaison complète ou tout au moins par une liaison interdisant la rotation autour de l'axe X. Le deuxième module mécanique de filtrage de vibrations 133 comprend également une pièce intermédiaire 133i liée d'une part à la pièce d'entrée 133a et d'autre part à la pièce de sortie 133b.

Le premier et le deuxième modules mécaniques de filtrage de vibrations sont disposés de part et d'autre de l'ensemble moteur 16 le long de l'axe longitudinal X. Autrement dit, le premier et le deuxième modules mécaniques de filtrage de vibrations sont aux deux extrémités de l'ensemble moteur 16 relativement à l'axe longitudinal X.

Le premier et le deuxième modules mécaniques de filtrage de vibrations comprennent chacun un accouplement de transmission rigide, disposant d'au moins un premier degré de liberté perpendiculairement à l'axe longitudinal X de l'actionneur.

L'actionneur électromécanique 11 comprend également un ou plusieurs modules élastiques 130 ou, autrement dit, un ou plusieurs modules d'absorption de vibrations 130, limitant le déplacement de l'ensemble moteur relativement au carter 17 suivant le premier degré de liberté. Chaque module élastique 130 forme ainsi une liaison déformable entre l'ensemble moteur 16 et le carter 17, en particulier suivant l'axe Z perpendiculaire à l'axe longitudinal X. De préférence, le module élastique 130 est indépendant et forme une entité séparée du premier ou du deuxième module mécanique de filtrage de vibrations 33, 133. Alternativement, un premier module élastique 130 peut être prévu sur la pièce de sortie 33b du premier module mécanique de filtrage de vibrations 33 et/ou sur l'ensemble moteur 16 et/ou un deuxième module élastique 130 peut être prévu sur la pièce d'entrée 133a du deuxième module mécanique de filtrage de vibrations 133 et/ou sur l'ensemble moteur 16.

Ainsi, les modules mécaniques de filtrage de vibrations 33, 133 permettent de transmettre principalement, voire exclusivement, les couples autour de l'axe X du moteur électrique et/ou du carter au support de couple et assurent une coupure de la transmission des vibrations radiales et axiales.

Pour ce faire, le module mécanique de filtrage de vibrations présente principalement une rigidité en torsion autour de l'axe X entre sa première et deuxième extrémité. Ses rigidités aux autres sollicitations (traction, compression, flexion) quelle que soit la direction et la torsion selon les directions Y ou Z perpendiculaires à la direction X sont largement inférieures, voire nulles. Ces faibles rigidités aux autres sollicitations permettent au module mécanique de filtrage de vibrations de transmettre très peu de vibrations de type traction-compression quelle que soit la direction de ces vibrations. Ces faibles rigidités aux autres sollicitations permettent aussi au module mécanique de filtrage de vibrations de transmettre très peu de vibrations de type torsion dont la direction est perpendiculaire à l'axe X. Ceci permet d'optimiser les caractéristiques physiques du module mécanique de filtrage de vibrations pour un bon filtrage des vibrations sans autre contrainte qu'une tenue mécanique à la torsion autour de l'axe X.

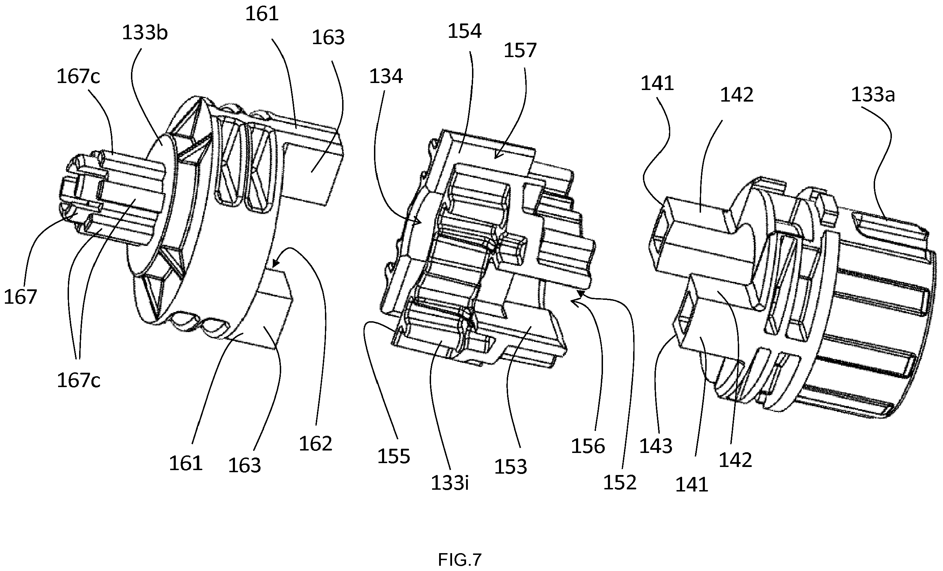

Dans un premier mode de réalisation, illustré aux figures 3 à 7, le premier et/ou le deuxième module mécanique de filtrage de vibrations peut comprendre un joint d'Oldham, notamment comme accouplement rigide. Par exemple, le premier module mécanique de filtrage de vibrations 33 est tel que la pièce intermédiaire 33i est liée à la pièce d'entrée 33a par une première liaison glissière 116 et est liée à la pièce de sortie 33b, par une deuxième liaison glissière 117, les première et deuxième liaisons glissières 116, 117 étant d'axes non parallèles entre eux, notamment d'axes perpendiculaires entre eux. Les première et deuxième liaisons glissières 116, 117 ont leurs axes perpendiculaires à l'axe X.

Ces liaisons glissières 116, 117 assurent un degré de liberté radialement par rapport à l'axe X, ce qui permet au joint d'Oldham de couper la transmission des vibrations dans le plan perpendiculaire à l'axe X, suivant les directions ou axes Y (perpendiculaire à X) et Z (perpendiculaire à X et Y).

Les liaisons glissières 116, 117 sont formées notamment par des parois internes 112, 113, 114, 115 formées dans la pièce intermédiaire 33i. Des plots 101 de la pièce d'entrée 33a s'étendant parallèlement à l'axe longitudinal X et présentant des surfaces de contact 102, 103, coopérant avec les parois internes 112, 113 de la pièce intermédiaire 33i, assurent la translation de la pièce intermédiaire 33i par rapport à la pièce d'entrée 33a, suivant le premier axe Y. Des plots 121 de la pièce de sortie 133b s'étendant parallèlement à l'axe longitudinal X et présentant des surfaces de contact 122, 123, coopérant avec les parois internes 114, 115 de la pièce intermédiaire 33i, assurent la translation de la pièce intermédiaire 33i par rapport à la pièce de sortie 33b, suivant le deuxième axe Z.

La pièce de sortie 33b comprend une interface externe 127, comprenant des cannelures externes 127c, adaptée à être connectée à l'ensemble moteur 16. Par exemple, les cannelures externes 127c coopèrent avec l'intérieur du tube 16u de l'ensemble moteur pour former une liaison fixe en rotation entre la pièce de sortie 33b et l'ensemble moteur. La pièce de sortie 33b comprend également une interface interne 128, munie de nervures internes 128n.

Avantageusement, les pièces d'entrée 33a, intermédiaire 33i et de sortie 33b sont creuses, laissant une ouverture 34 centrale libre pour le passage de câbles d'alimentation du moteur au travers du premier module mécanique de filtrage de vibrations 33.

De manière équivalente, le deuxième module mécanique de filtrage de vibrations 133 est tel que la pièce intermédiaire 133i est liée à la pièce d'entrée 133a par une troisième liaison glissière 156 et est liée à la pièce de sortie 133b par une quatrième liaison glissière 157, les troisième et quatrième liaisons glissières 156, 157 étant d'axes non parallèles entre eux, notamment d'axes perpendiculaires entre eux. Les troisième et quatrième liaisons glissières 156, 157 ont leurs axes perpendiculaires à l'axe X.

Ces liaisons glissières 156, 157 assurent un degré de liberté radialement par rapport à l'axe X, ce qui permet au joint d'Oldham de couper la transmission des vibrations dans le plan perpendiculaire à l'axe X, suivant les directions ou axes Y (perpendiculaire à X) et Z (perpendiculaire à X et Y).

Les liaisons glissières 156, 157 sont formées notamment par des parois internes 152, 153, 154, 155 formées dans la pièce intermédiaire 133i. Des plots 141 de la pièce d'entrée 133a s'étendant parallèlement à l'axe longitudinal X et présentant des surfaces de contact 142, 143, coopérant avec les parois internes 152, 153 de la pièce intermédiaire 133i, assurent la translation de la pièce intermédiaire 133i par rapport à la pièce d'entrée 133a, suivant le premier axe Y. Des plots 121 de la pièce de sortie 133b s'étendant parallèlement à l'axe longitudinal X et présentant des surfaces de contact 162, 163, coopérant avec les parois internes 154, 155 de la pièce intermédiaire 133i, assurent la translation de la pièce intermédiaire 133i par rapport à la pièce de sortie 133b, suivant le deuxième axe Z.

La pièce de sortie 133b comprend une interface de sortie 167, comprenant des cannelures externes 167c, adaptée à être connectée à l'arbre de sortie 20. Par exemple, les cannelures externes 167c coopèrent avec un arbre creux de l'arbre de sortie pour former une liaison fixe en rotation entre la pièce de sortie 33b et l'arbre de sortie 20.

De manière avantageuse, les pièces intermédiaires 33i et 133i sont identiques. De la même manière, la pièce de sortie 33b du premier module mécanique de filtrage de vibrations 33 est identique à la pièce d'entrée 133a du deuxième module mécanique de filtrage de vibrations 133. Ainsi, une interface interne 128 de la pièce d'entrée 133b, identique à l'interface interne 128 de la pièce de sortie 33b du premier module mécanique de filtrage de vibrations 33 et visible à la figure 5, permet d'assurer une liaison avec un arbre de sortie 16v de l'ensemble moteur 16, muni de godrons coopérants avec les nervures internes 128n.

Dans le cas où l'actionneur électromécanique comprend deux joints d'Oldham, les axes des glissières des deux joints ne sont pas nécessairement parallèles.

Les axes des glissières d'un même joint d'Oldham ne sont pas nécessairement perpendiculaires.

Dans les joints d'Oldham décrits précédemment, les rainures et les plots pourraient être inversés : les rainures pourraient se trouver sur les pièces d'entrée et de sortie et les plots pourraient se trouver sur les pièces intermédiaires.

Dans les joints d'Oldham, les pièces d'entrée et/ou de sortie et/ou les pièces intermédiaires peuvent être en matière plastique (polymère ou polyamide) ou en métal.

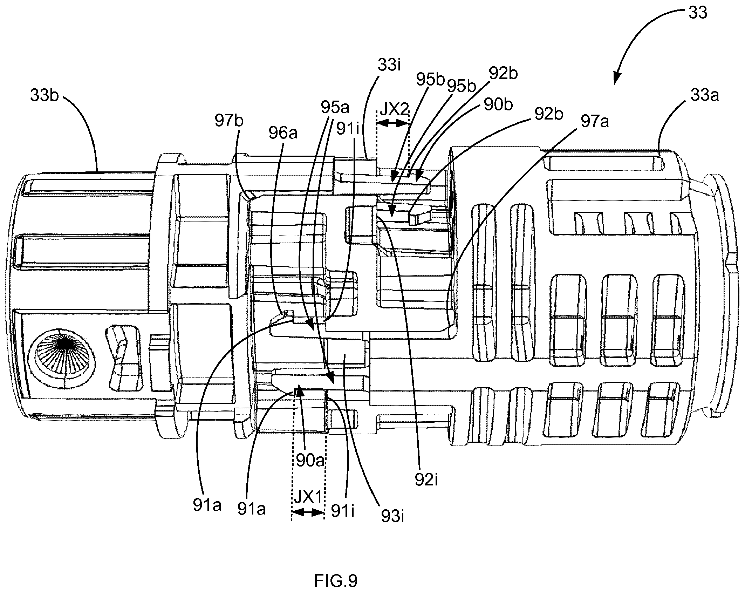

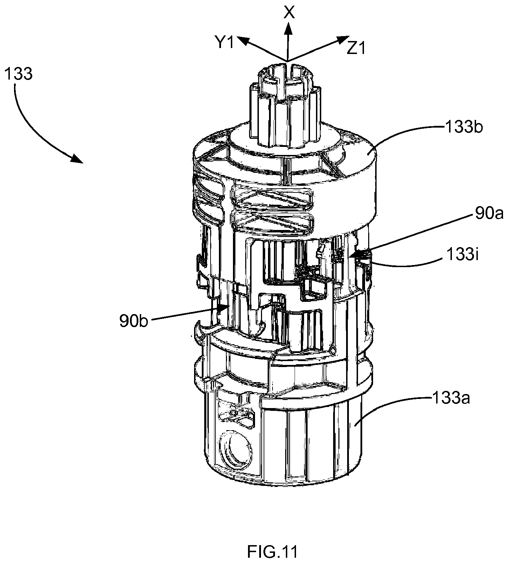

Deux exemples de premier module mécanique de filtrage de vibration et de deuxième module mécanique de filtrage de vibration sont représentés assemblés sur les figures 9 à 11. Ils sont décrits ci-après plus en détail en référence aux figures 9 et 11.

L'actionneur électromécanique 11 peut comprendre un premier module mécanique de filtrage de vibration 33 du type joint d'Oldham.

Comme vu précédemment, le premier module mécanique de filtrage de vibration 33 comprend :
- une pièce d'entrée 33a,
- une pièce de sortie 33b,
- une pièce intermédiaire 33i,
- une première liaison glissière 116, suivant un premier axe Y1, entre la pièce intermédiaire et la pièce d'entrée,
- une deuxième liaison glissière 117, suivant un deuxième axe Z1, entre la pièce intermédiaire et la pièce de sortie. Les premier et deuxième axes Y1 et Z1 sont perpendiculaires à l'axe longitudinal X.

Le premier module mécanique de filtrage de vibration comprend en outre :
- des premiers éléments 90a, 91a, 91i, 93a, 93i de limitation des déplacements, en translation selon au moins l'un du premier axe Y1 et de l'axe longitudinal X, de la pièce d'entrée relativement à la pièce intermédiaire, et/ou
- des deuxièmes éléments 90b, 92b, 92i, 94a, 94i de limitation des déplacements, en translation selon au moins l'un du deuxième axe Z1 et de l'axe longitudinal X, de la pièce de sortie relativement à la pièce intermédiaire.

L'actionneur électromécanique 11 peut avantageusement comprendre un deuxième module mécanique de filtrage de vibration 133 du type joint d'Oldham.

Dans ce cas, le deuxième module mécanique de filtrage de vibration 133 peut comprendre :
- une pièce d'entrée 133a,
- une pièce de sortie 133b,
- une pièce intermédiaire 133i,
- une première liaison glissière 116, suivant un premier axe Y1, entre la pièce intermédiaire et la pièce d'entrée,
- une deuxième liaison glissière 117, suivant un deuxième axe Z1, entre la pièce intermédiaire et la pièce de sortie. Les premier et deuxième axes Y1 et Z1 sont perpendiculaires à l'axe longitudinal X.

Le deuxième module mécanique de filtrage de vibration comprend alors avantageusement :
- des premiers éléments 90a, 91a, 91i, 93a, 93i de limitation des déplacements, en translation selon au moins l'un du premier axe Y1 et de l'axe longitudinal X, de la pièce d'entrée relativement à la pièce intermédiaire, et/ou
- des deuxièmes éléments 90b, 92b, 92i, 94a, 94i de limitation des déplacements, en translation selon au moins l'un du deuxième axe Z1 et de l'axe longitudinal X, de la pièce de sortie relativement à la pièce intermédiaire.

Les premiers axes Y1 associés au premier module mécanique de filtrage de vibration et au deuxième module mécanique de filtrage de vibration ne sont pas nécessairement parallèles. Les deuxièmes axes Z1 associés au premier module mécanique de filtrage de vibration et au deuxième module mécanique de filtrage de vibration ne sont pas nécessairement parallèles. Les premiers axes Y1 associés au premier module mécanique de filtrage de vibration et au deuxième module mécanique de filtrage de vibration peuvent aussi être parallèles. Les deuxièmes axes Z1 associés au premier module mécanique de filtrage de vibration et au deuxième module mécanique de filtrage de vibration peuvent aussi être parallèles.

Les premiers éléments de limitation des déplacements comprennent par exemple :
- des premières languettes 90a faisant partie de la pièce d'entrée ou de la pièce intermédiaire, les premières languettes s'étendant principalement selon l'axe longitudinal X, et/ou
- des surfaces de butée 91i, 93i faisant partie de la pièce intermédiaire ou de la pièce d'entrée, notamment destinées à coopérer par contact avec les premières languettes, en particulier destinées à coopérer par contact avec des premières faces 91a, 93a des premières languettes.

Les deuxièmes éléments de limitation des déplacements comprennent par exemple :
- des deuxièmes languettes 90b faisant partie de la pièce de sortie ou de la pièce intermédiaire, les deuxièmes languettes s'étendant principalement selon l'axe longitudinal, et
- des surfaces de butée 92i, 94i faisant partie de la pièce intermédiaire et/ou de la pièce de sortie, notamment destinées à coopérer par contact avec les deuxièmes languettes, en particulier destinées à coopérer par contact avec des deuxièmes faces 92b, 94b des deuxièmes languettes.

En particulier, les éléments 91a et 91i permettent de limiter les déplacements selon l'axe longitudinal X. De même, les éléments 92a et 92i permettent de limiter les déplacements selon l'axe longitudinal X.

En particulier, les éléments 92a et 92i permettent de limiter les déplacements selon le premier axe Y1. De même, les éléments 94a et 94i permettent de limiter les déplacements selon le deuxième axe Z1.

Ainsi, par exemple, le module mécanique de filtrage de vibrations 33 ou 133 peut être maintenu par la pièce d'entrée (avec l'axe longitudinal perpendiculaire au champ de gravitation terrestre) sans que la pièce intermédiaire ne se désolidarise de la pièce d'entrée et sans que la pièce de sortie ne se désolidarise de la pièce intermédiaire. Finalement, le module mécanique de filtrage de vibrations 33 ou 133 peut être maintenu par la pièce d'entrée dans n'importe quelle position sans que la pièce intermédiaire ne se désolidarise de la pièce d'entrée et sans que la pièce de sortie ne se désolidarise de la pièce intermédiaire.

Dans les modes de réalisation des figures 9 à 11, les faces 94a, 94b sont réalisées sur les languettes. Toutefois, ces faces peuvent alternativement être réalisées ailleurs que sur les languettes.

Dans les modes de réalisation représentés sur les figures 9 à 11, les premières languettes 90a font partie de la pièce d'entrée et les surfaces de butée 91i font partie de la pièce intermédiaire. Toutefois, les localisations de ces éléments pourraient être inversées. On aurait ainsi les languettes sur la pièce intermédiaire et les surfaces de butée sur la pièce d'entrée. Alternativement encore, une ou plusieurs languettes pourraient être prévues sur la pièce d'entrée et une ou plusieurs languettes pourraient être prévues sur la pièce intermédiaire.

Dans les modes de réalisation représentés sur les figures 9 à 11, les deuxièmes languettes 90b font partie de la pièce de sortie et les surfaces de butée 92i font partie de la pièce intermédiaire. Toutefois, les localisations de ces éléments pourraient être inversées. On aurait ainsi les deuxièmes languettes sur la pièce intermédiaire et les surfaces de butées sur la pièce de sortie. Alternativement encore, une ou plusieurs deuxièmes languettes pourraient être prévues sur la pièce de sortie et une ou plusieurs languettes pourraient être prévues sur la pièce intermédiaire.

De préférence, chaque languette 90a, 90b comprend au moins une première partie flexible 95a, 95b. Cette partie flexible est par exemple un bras flexible 95a, 95 s'étendant parallèlement à l'axe longitudinal X. Dans les modes de réalisation des figures 9 à 11, chaque languette 90a, 90b comprend deux bras flexibles 95a, 95b. Alternativement, une languette ou certaines languettes ou chaque languette ne pourraient comprendre qu'une seule partie flexible, notamment qu'un seul bras flexible.

Comme dans les modes de réalisation des figures 9 à 11, les languettes sont de préférence réalisées aux extrémités des glissières, notamment aux extrémités des plots 101, 121, 141, 161 des glissières. Avec une telle localisation, les languettes peuvent également servir à limiter les courses des liaisons glissières. Toutefois, les languettes peuvent être réalisées ailleurs qu'aux extrémités des glissières. L'objectif principal dans tous les modes de réalisation est de limiter le jeu entre les pièces d'entrée, intermédiaire et de sortie suivant au moins l'un des trois axes X, Y1, Z1, préférentiellement suivant les trois axes.

De préférence, les languettes, en particulier les parties flexibles, comprennent chacune au moins une première face d'extrémité inclinée 96a, notamment au niveau de leurs extrémités distales. Dans les modes de réalisation des figures 9 à 11, chaque languette comprend deux faces d'extrémité inclinée 96a. Par « face d'extrémité inclinée », on entend une face orientée formant un angle non nul et non droit avec la troisième direction X, par exemple un angle de l'ordre de 45°. Les faces inclinées sont agencées de sorte que lorsque l'on assemble deux pièces du module mécanique de filtrage de vibration, par exemple la pièce d'entrée 33a avec la pièce intermédiaire 331, un effort est exercé par le biais des surfaces inclinées, sur les parties flexibles des languettes, provoquant leur fléchissement. Une fois que les pièces sont assemblées, l'effort sur les parties inclinées est relâché. Dans cet état, les parties flexibles retrouvent leurs formes d'origine non contraintes sous l'effet de la restitution élastique des portions flexibles. Les parties flexibles sont donc sollicitées dans leur domaine de déformation élastique lors de l'assemblage du module mécanique de filtrage de vibrations. Une fois leur forme d'origine non contrainte retrouvée (ou une forme déformée moins contrainte que lors de l'assemblage retrouvée), les surfaces de butée 91i de la deuxième pièce peuvent interférer avec les premières faces 91a de sorte à éviter que les première et deuxième pièces ne se séparent l'une de l'autre. La séparation demeure toutefois possible après action mécanique spécifique sur les parties flexibles pour les décaler par rapport aux surfaces de butée 91a. De préférence, la pièce qui porte les surfaces de butées peut également être munie de rampes 97a, 97b destinées à coopérer temporairement avec les faces inclinées 96a, 96b pour faciliter l'assemblage.

Autrement dit, la pièce d'entrée se clipse sur la pièce intermédiaire et la pièce de sortie se clipse sur la pièce intermédiaire.

De préférence, les premiers éléments de limitation sont agencés de sorte que la pièce d'entrée et la pièce intermédiaire présentent un jeu JX1 de l'ordre de quelques millimètres.

De préférence, les deuxièmes éléments de limitation sont agencés de sorte que la pièce de sortie et la pièce intermédiaire présentent un jeu JX2 de l'ordre de quelques millimètres.

De préférence, les premiers éléments de limitation sont agencés de sorte que la pièce d'entrée et la pièce intermédiaire présentent un jeu selon le premier axe Y1 de l'ordre de quelques millimètres.

De préférence, les deuxièmes éléments de limitation sont agencés de sorte que la pièce de sortie et la pièce intermédiaire présentent un jeu selon le deuxième axe Z1 de l'ordre de quelques millimètres.

Sur les figures 3 à 7, les languettes 90a, 90b n'ont pas été représentées.

Enfin, il doit être noté que sur les figures, les pièces 33a, 33i, 33b ou 133a, 133i, 133b sont représentées avec des axes longitudinaux confondus entre eux et confondus avec l'axe X. Les différentes pièces des modules mécaniques de filtrage de vibration sont donc décrites dans cette configuration. Toutefois, bien évidemment, l'intérêt d'un module mécanique de filtrage de vibration sous forme d'un joint d'Oldham réside dans le fait qu'un couple mécanique de rotation autour de l'axe longitudinal X (et de préférence seulement un couple mécanique de rotation autour de l'axe longitudinal X) puisse être transmis de la pièce d'entrée à la pièce de sortie que les pièces d'entrée et de sortie soient ou non alignées.

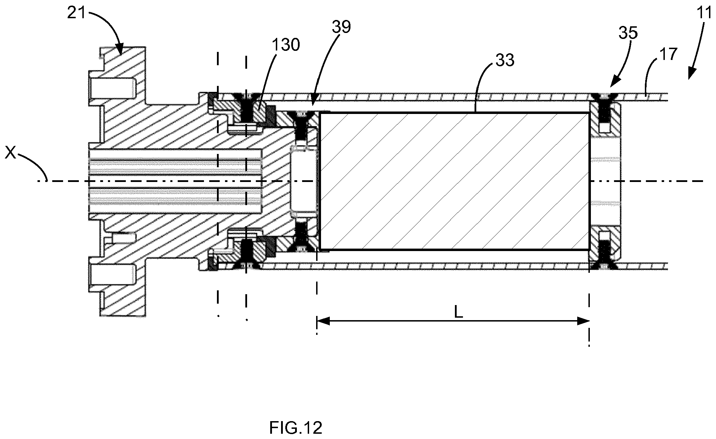

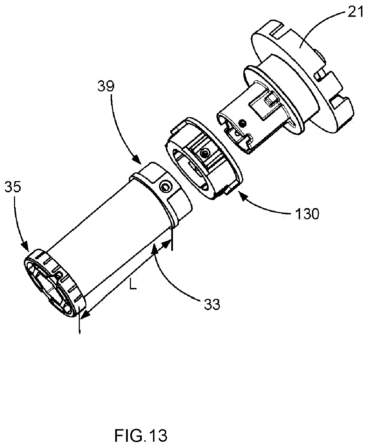

Comme représenté sur les figures 12 et 13, un module mécanique de filtrage de vibration 33 tel que décrit précédemment peut être compris dans un actionneur électromécanique 11 pour installation de fermeture, d'occultation ou de protection solaire 6. L'actionneur électromécanique 11 comprend un moteur électrique 16, un carter 17, le module mécanique de filtrage de vibration 33, un module d'absorption de vibrations 130 et un support de couple 21, insérés au moins partiellement dans le carter 17. Le module mécanique de filtrage de vibrations 33 comprend une première extrémité 35 et une deuxième extrémité 39, séparées par une longueur L. La première extrémité 35 du module mécanique de filtrage de vibrations 33 est liée mécaniquement directement ou indirectement au carter 17. La deuxième extrémité 39 du module mécanique de filtrage de vibrations 33 est liée mécaniquement au support de couple 21. Le module mécanique de filtrage de vibrations 33 assure la liaison mécanique entre le carter 17 et le support de couple en rotation autour de l'axe longitudinal X de l'actionneur. Le module d'absorption de vibrations lie mécaniquement le carter 17 au support de couple 21 en translation perpendiculairement à l'axe longitudinal X de l'actionneur en autorisant un degré de liberté en rotation entre le carter 17 et le support de couple 21 autour de l'axe longitudinal X.

Le module d'absorption de vibrations 130 comprend de préférence une première bague 131 en matériau souple, notamment en matériau élastomère et/ou viscoélastique, disposée autour d'une partie 210 du support de couple 21 et une deuxième bague 132 en matériau rigide, disposée autour de la première bague 131 ou insérée dans la première bague 131.

Dans un deuxième mode de réalisation illustré à la figure 8, un module mécanique de filtrage de vibrations peut comprendre une liaison de type à tripode ou au moins à bipode, par exemple telle que définie dans la demande de brevet WO 2013/007642 A1 ou dans le brevet US6325722. Par exemple, le premier module mécanique de filtrage de vibrations 33 est tel que la pièce intermédiaire 233i est liée à la pièce d'entrée 233a par une première liaison mécanique de type rotule, assurant un mouvement de rotulage entre la pièce intermédiaire 233i et la pièce d'entrée 233a et la pièce intermédiaire 233i est liée à la pièce de sortie 233b par une deuxième liaison mécanique de type rotule assurant un mouvement de rotulage entre la pièce intermédiaire 233i et la pièce de sortie 233b. Les première et deuxième liaisons mécaniques comprennent par exemple des premiers pions de la pièce intermédiaire 233i coopérant avec des rainures de la pièce d'entrée 233a (ou inversement des premiers pions de la pièce d'entrée 233a coopérant avec des rainures de la pièce intermédiaire 233i) et des deuxièmes pions de la pièce intermédiaire 233i coopérant avec des rainures de la pièce de sortie 233b (ou inversement des deuxièmes pions de la pièce de sortie 233b coopérant avec des rainures de la pièce intermédiaire 233i).

De la même manière ou alternativement, le deuxième module mécanique de filtrage de vibrations 133 est tel que la pièce intermédiaire 333i est liée à la pièce d'entrée 333a par une troisième liaison mécanique de type rotule, assurant un mouvement de rotulage entre la pièce intermédiaire 333i et la pièce d'entrée 333a et la pièce intermédiaire 333i est liée à la pièce de sortie 333b par une quatrième liaison mécanique de type rotule assurant un mouvement de rotulage entre la pièce intermédiaire 333i et la pièce de sortie 333b. Les première et deuxième liaisons mécaniques comprennent par exemple des premiers pions de la pièce intermédiaire 333i coopérant avec des rainures de la pièce d'entrée 333a (ou inversement des premiers pions de la pièce d'entrée 333a coopérant avec des rainures de la pièce intermédiaire 333i) et des deuxièmes pions de la pièce intermédiaire 333i coopérant avec des rainures de la pièce de sortie 333b (ou inversement des deuxièmes pions de la pièce de sortie 333b coopérant avec des rainures de la pièce intermédiaire 333i).

Ces liaisons de type rotule ou pivot assurent des degrés de liberté radialement par rapport à l'axe X, ce qui permet aux liaisons à tripode de couper la transmission des vibrations suivant les directions Y et Z.

Dans un troisième mode de réalisation non représenté, un module mécanique de filtrage de vibrations peut comprendre ou être un joint de Schmidt. Par exemple : la pièce intermédiaire 33i, 133i est liée à la pièce d'entrée 33a, 133a par une première liaison mécanique assurant un mouvement de translation circulaire entre la pièce intermédiaire 33i, 133i et la pièce d'entrée 33a, 133a et la pièce intermédiaire 33i, 133i est liée à la pièce de sortie 33b, 133b par une deuxième liaison mécanique assurant un mouvement de translation circulaire entre la pièce intermédiaire 33i, 133i et la pièce de sortie 33b, 133b. Les première et deuxième liaisons mécaniques comprennent par exemple des premières biellettes reliant la pièce intermédiaire 33i, 133i et la pièce d'entrée 33a, 133a et des deuxièmes biellettes reliant la pièce intermédiaire 33i, 133i et la pièce de sortie 33b, 133b.

Ces liaisons de type rotule ou pivot assurent des degrés de liberté radialement par rapport à l'axe X, ce qui permet au joint de Schmidt de couper la transmission des vibrations suivant les directions Y et Z.

Dans les différents modes de réalisation des modules mécaniques de filtrage de vibrations 33, 133 décrits plus haut, la pièce d'entrée 33a, 233a du premier module mécanique de filtrage de vibrations 33 est fixée directement ou indirectement au support de couple 21 et la pièce de sortie 133b, 333b du deuxième module mécanique de filtrage de vibrations 133 est fixée à l'arbre de sortie 20. Le premier et le deuxième module mécanique de filtrage des vibrations 33, 133 comprennent également chacun un deuxième degré de liberté parallèlement à l'axe longitudinal de l'actionneur électromécanique 11. Ceci permet notamment aux différentes pièces en mouvement suivant le premier degré de liberté, de pouvoir librement se déplacer les unes par rapport aux autres et assurer leur fonction de filtrage de vibrations.

De préférence, le premier module mécanique de filtrage de vibrations 33 est fixé directement au carter 17 par une liaison rigide sans degré de liberté. De préférence encore, le deuxième module mécanique de filtrage de vibrations est fixé directement à l'arbre de sortie 20 par une liaison rigide sans degré de liberté.

Alternativement, la pièce de sortie 133b du deuxième module mécanique de filtrage de vibrations 133 est formée intégralement par l'arbre de sortie 20.

Le carter s'étend préférentiellement au-dessus de chaque module mécanique de filtrage de vibrations pour masquer et protéger celui-ci contre les éléments extérieurs (poussières, pollution...).

L'arbre de sortie est maintenu en rotation par rapport au carter 17 par une liaison appropriée, notamment par une pièce 35 formant palier, visible à la figure 8.

Le ou les degrés de liberté des modules mécaniques de filtrage de vibrations 33, 133 autorisent un débattement radial relativement à l'axe X de l'ensemble moteur par rapport au carter 17. La transmission du couple autour de l'axe X reste cependant rigide en ce sens qu'elle ne fait pas appel à des propriétés élastiques d'un matériau intermédiaire tel qu'un élastomère, mais bien à des contacts rigides entre les parties des accouplements.

Les actionneurs électromécaniques utilisés dans les installations de fermeture, d'occultation ou de protection solaire sont principalement de forme tubulaire, c'est-à-dire cylindrique allongée, pour être insérés dans les tubes d'enroulement sur lesquels s'enroulent les écrans. Ils présentent ainsi une symétrie de révolution, autour de l'axe longitudinal. Ils n'ont ainsi pas d'orientation angulaire de montage prédéfinie. En utilisant des accouplements conformes à l'invention, on autorise un degré de liberté, perpendiculairement à l'axe longitudinal de l'actionneur. Il est ainsi toutefois nécessaire de limiter le mouvement de l'ensemble moteur dans le carter, perpendiculairement à l'axe longitudinal, de sorte à éviter que l'ensemble moteur en vienne en contact rigide directement avec le carter, notamment sous l'effet de son propre poids. Cette limitation est prise en charge notamment par le module élastique 130, qui s'étend autour de l'ensemble moteur 16.

Pour assurer le centrage de l'ensemble moteur 16, le module élastique 130 ayant une symétrie de révolution permet de limiter le déplacement de l'ensemble moteur 16 relativement au carter 17 suivant le premier degré de liberté et d'éviter tout contact direct entre l'ensemble moteur 16 et le carter 17.

Le module élastique 130 peut prendre la forme d'une bague ou d'un anneau en matériau élastique ou viscoélastique, par exemple en élastomère, par exemple sous forme d'un joint torique ou sous forme d'anneau plat, placé autour de l'ensemble moteur. Celui-ci peut être en contact ou non avec le carter 17. Il limite dans les deux cas le déplacement radial possible de l'ensemble moteur par rapport au carter 17, sans toutefois être sollicité en torsion. De préférence, le module élastique 130 comprend des bossages ou godrons sur ses surfaces en contact avec le carter 17 et/ou l'ensemble moteur 16, les bossages étant préférentiellement arrangés parallèlement à un axe de symétrie X130 du module élastique 130. Cet axe X130 est de préférence confondu avec l'axe X lorsque l'actionneur est assemblé. Ces bossages permettent de limiter le contact entre le module élastique 130 et l'ensemble moteur 16 et/ou le carter 17, ainsi que de limiter la raideur de ce contact, permettant ainsi de limiter la transmission de vibrations. Ces bossages ou godrons facilitent également l'assemblage de l'ensemble moteur 16 dans le carter 17 de l'actionneur électromécanique 11.

La souplesse en compression radiale du module élastique 130 permet de limiter les mouvements radiaux de l'ensemble moteur, selon les axes perpendiculaires à l'axe de rotation X. Bien que le module élastique puisse être sujet à des phénomènes de fluage ou relaxation, ceux-ci n'auront pas d'impact sur la position angulaire de l'arbre de sortie de l'actionneur. D'autre part, le module élastique 130 présentant une symétrie de révolution, les contraintes liées au poids de l'ensemble moteur 16 lors des arrêts prolongés se répartiront sur toute la circonférence du module élastique 130 puisque ces arrêts prolongés auront lieu dans des positions angulaires différentes.

Le module élastique 130 est monté glissant sur l'ensemble moteur 16 et dans le carter 17. Il est ainsi maintenu par simple contact sur l'ensemble moteur 16 et dans le carter 17. Eventuellement, il peut être prévu des zones d'extrémité 16s, 16t de l'ensemble moteur, ayant un diamètre réduit par rapport à l'ensemble moteur 16, pour permettre de loger, dans chacune, un module élastique 130, comme représenté sur les figures 3 ou 4.

Dans les différents modes de réalisation, le carter recouvre partiellement ou intégralement le premier et le deuxième module mécanique de filtrage de vibrations et le module élastique.

En variante non représentée, l'actionneur électromécanique 11 peut être inséré dans un rail, en particulier de section carrée ou rectangulaire, pouvant être ouvert à l'une ou à ses deux extrémités, dans la configuration assemblée du dispositif 3. Par ailleurs, l'actionneur électromécanique 11 peut être configuré pour entraîner un arbre d'entraînement sur lequel s'enroule des cordons de déplacement et/ou d'orientation de lames de l'écran 2.

Dans tout ce document, par « surface orientée selon un axe » ou par « face orientée selon un axe », on entend une surface ou une face perpendiculaire à cet axe, c'est-à-dire une face dont le vecteur normal est parallèle à cet axe.

## Revendications

1. Actionneur électromécanique (11) pour installation de fermeture, d'occultation ou de protection solaire (6), l'actionneur électromécanique (11) comprenant un ensemble moteur (16), comprenant un moteur électrique (261) et un réducteur (265), un premier module mécanique de filtrage de vibrations (33), un deuxième module mécanique de filtrage de vibrations (133) et un arbre de sortie (20), insérés au moins partiellement dans un carter (17) de l'actionneur électromécanique (11), l'actionneur électromécanique (11) s'étendant suivant un axe longitudinal (X), le premier et le deuxième modules mécaniques de filtrage de vibrations (33, 133) étant disposés de part et d'autre de l'ensemble moteur (16) le long de l'axe longitudinal (X) et comprenant chacun un accouplement de transmission rigide, disposant d'au moins un premier degré de liberté perpendiculairement à l'axe longitudinal (X) de l'actionneur électromécanique (11), autorisant un déplacement de l'ensemble moteur (16) suivant un plan perpendiculaire à l'axe longitudinal (X) de l'actionneur électromécanique (11), l'actionneur électromécanique comprenant en outre au moins un module élastique (130) limitant le déplacement de l'ensemble moteur (16) suivant le plan perpendiculaire à l'axe longitudinal (X) de l'actionneur électromécanique (11).

2. Actionneur électromécanique (11) selon la revendication 1, **caractérisé en ce que** le premier module mécanique de filtrage de vibrations (33) comprend une première pièce d'entrée (33a ; 233a) liée mécaniquement directement ou indirectement à un support de couple (21), en particulier liée au carter (17), une première pièce de sortie (33b ; 233b) liée mécaniquement directement ou indirectement à l'ensemble moteur (16) et une première pièce intermédiaire (33i ; 233i) liée d'une part à la première pièce d'entrée (33a ; 233a) et d'autre part à la première pièce de sortie (33b ; 233b) et disposant d'au moins un degré de liberté en translation suivant une direction perpendiculaire à l'axe longitudinal (X) par rapport à la première pièce d'entrée (33a ; 233a) et disposant d'au moins un degré de liberté en translation suivant une direction perpendiculaire à l'axe longitudinal (X) par rapport à la première pièce de sortie (33b ; 233b) et **en ce que** le deuxième module mécanique de filtrage de vibrations (133) comprend une deuxième pièce d'entrée (133a ; 333a) liée mécaniquement directement ou indirectement à un support de couple (21), en particulier liée au carter (17), une deuxième pièce de sortie (133b ; 333b) liée mécaniquement directement ou indirectement à l'ensemble moteur (16) et une deuxième pièce intermédiaire (133i ; 333i) liée d'une part à la deuxième pièce d'entrée (133a ; 333a) et d'autre part à la deuxième pièce de sortie (133b ; 333b) et disposant d'au moins un degré de liberté en translation suivant une direction perpendiculaire à l'axe longitudinal (X) par rapport à la deuxième pièce d'entrée (133a ; 333a) et disposant d'au moins un degré de liberté en translation suivant une direction perpendiculaire à l'axe longitudinal (X) par rapport à la deuxième pièce de sortie (133b ; 333b).

3. Actionneur électromécanique (11) selon la revendication précédente, **caractérisé en ce que** la première pièce de sortie (33b ; 233b) du premier module mécanique de filtrage de vibrations (33) comprend une interface externe (127), comprenant des cannelures externes (127c), adaptée à être connectée à l'ensemble moteur (16) et/ou **en ce que** la deuxième pièce d'entrée (133a; 333a) du deuxième module mécanique de filtrage de vibrations (133) comprend une interface interne (128), munie de nervures internes (128n), adaptée à être connectée à un arbre de sortie (16v) de l'ensemble moteur (16).

4. Actionneur électromécanique (11) selon l'une des revendications précédentes, **caractérisé en ce qu'**il comprend, insérés au moins partiellement dans le carter (17) de l'actionneur électromécanique (11), :
- l'ensemble moteur (16), comprenant le moteur électrique (261) et le réducteur (265),
- l'arbre de sortie (20), et
- au moins le premier module mécanique de filtrage de vibrations (33), l'actionneur électromécanique (11) s'étendant suivant l'axe longitudinal (X), le premier module mécanique de filtrage de vibrations (33, 133) étant disposé le long de l'axe longitudinal (X) et comprenant un accouplement de transmission rigide, disposant d'au moins un premier degré de liberté perpendiculairement à l'axe longitudinal (X) de l'actionneur électromécanique (11), autorisant un déplacement de l'ensemble moteur (16) suivant un plan perpendiculaire à l'axe longitudinal (X) de l'actionneur électromécanique (11), le premier module mécanique de filtrage de vibration (33) comprenant :
- une pièce d'entrée (33a ),
- une pièce de sortie (33b ),
- une pièce intermédiaire (33i ),
- une première liaison glissière (116), suivant un premier axe (Y1), entre la pièce intermédiaire et la pièce d'entrée,
- une deuxième liaison glissière (117), suivant un deuxième axe (Z1), entre la pièce intermédiaire et la pièce de sortie, le premier axe (Y1) et le deuxième axe (Z1) étant perpendiculaires à l'axe longitudinal (X) de l'actionneur électromécanique (11),
- des premiers éléments (90a, 91a, 91i, 93a, 93i) de limitation des déplacements, en translation selon au moins l'un du premier axe (Y1) et de l'axe longitudinal (X), de la pièce d'entrée relativement à la pièce intermédiaire et/ou des deuxièmes éléments (90b, 92b, 92i, 94b, 94i) de limitation des déplacements, en translation selon au moins l'un du deuxième axe (Z1) et de l'axe longitudinal (X), de la pièce de sortie relativement à la pièce intermédiaire.

5. Actionneur électromécanique (11) selon la revendication précédente, **caractérisé en ce que** les premiers éléments de limitation des déplacements comprennent :
- des premières languettes (90a) faisant partie de la pièce d'entrée ou de la pièce intermédiaire, les premières languettes s'étendant principalement selon l'axe longitudinal (X), et
- des surfaces de butée (91i, 93i) faisant partie respectivement de la pièce intermédiaire ou de la pièce d'entrée, notamment destinées à coopérer par contact avec les premières languettes, en particulier destinées à coopérer par contact avec des premières faces (91a, 93a) des premières languettes.

6. Actionneur électromécanique (11) selon l'une des revendications 4 et 5, **caractérisé en ce que** les deuxièmes éléments de limitation des déplacements comprennent :
- des deuxièmes languettes (90b) faisant partie de la pièce de sortie ou de la pièce intermédiaire, les deuxièmes languettes s'étendant principalement selon l'axe longitudinal (X), et
- des surfaces de butée (92i, 94i) faisant partie respectivement de la pièce intermédiaire ou de la pièce de sortie, notamment destinées à coopérer par contact avec les deuxièmes languettes, en particulier destinées à coopérer par contact avec des deuxièmes faces (92b, 94b) des deuxièmes languettes.

7. Actionneur électromécanique (11) selon l'une des revendications 5 et 6, **caractérisé en ce que** chaque première languette comprend au moins une première partie flexible (95a), notamment un premier bras flexible (95a) ou deux premiers bras flexibles (95a) et/ou **en ce que** chaque deuxième languette comprend au moins une deuxième partie flexible (95b), notamment un deuxième bras flexible (95b) ou deux deuxièmes bras flexibles (95b).

8. Actionneur électromécanique (11) selon la revendication précédente, **caractérisé en ce que** chaque première languette comprend au moins une première face d'extrémité inclinée (96a) et/ou **en ce que** chaque deuxième languette comprend au moins une deuxième face d'extrémité inclinée (96a).

9. Actionneur électromécanique (11) selon l'une des revendications précédentes, **caractérisé en ce que** le deuxième module mécanique de filtrage de vibrations (133) comprend
- une pièce d'entrée (133a),
- une pièce de sortie (133b),
- une pièce intermédiaire (133i),
- une première liaison glissière (116), suivant un premier axe (Y1), entre la pièce intermédiaire et la pièce d'entrée,
- une deuxième liaison glissière (117), suivant un deuxième axe (Z1), entre la pièce intermédiaire et la pièce de sortie, le premier axe (Y1) et le deuxième axe (Z1) étant perpendiculaires à l'axe longitudinal (X) de l'actionneur électromécanique (11),
- des premiers éléments (90a, 91a, 91i, 93a, 93i) de limitation des déplacements, en translation selon au moins l'un du premier axe (Y1) et de l'axe longitudinal (X), de la pièce d'entrée relativement à la pièce intermédiaire et/ou des deuxièmes éléments (90b, 92b, 92i, 94b, 94i) de limitation des déplacements, en translation selon au moins l'un du premier axe (Y1) et de l'axe longitudinal (X), de la pièce de sortie relativement à la pièce intermédiaire.

10. Actionneur électromécanique selon l'une des revendications 4 à 9, comprenant en outre un module d'absorption de vibrations (130) et un support de couple (21), insérés au moins partiellement dans le carter (17),
- la pièce d'entrée (33a) du premier module mécanique de filtrage de vibrations (33) étant liée mécaniquement directement ou indirectement au carter (17),
- la pièce de sortie (33b) du premier module mécanique de filtrage de vibrations (33) étant liée mécaniquement au support de couple (21),
le module mécanique de filtrage de vibrations (33) assurant la liaison mécanique entre le carter (17) et le support de couple en rotation autour de l'axe longitudinal (X) de l'actionneur, le module d'absorption de vibrations liant mécaniquement le carter (17) au support de couple (21) en translation perpendiculairement à l'axe longitudinal (X) de l'actionneur en autorisant un degré de liberté en rotation entre le carter (17) et le support de couple (21) autour de l'axe longitudinal (X).

11. Actionneur électromécanique (11) selon la revendication précédente, **caractérisé en ce que** le module d'absorption de vibrations (130) comprend une première bague (131) en matériau souple, notamment en matériau élastomère et/ou viscoélastique, disposée autour d'une partie (210) du support de couple (21) et une deuxième bague (132) en matériau rigide, disposée autour de la première bague (131) ou insérée dans la première bague (131).

12. Installation domotique de fermeture, d'occultation ou de protection solaire (6) comprenant un écran (2), un tube d'enroulement (4) et un actionneur électromécanique (11) selon l'une quelconque des revendications précédentes, l'écran (2) étant enroulable sur le tube d'enroulement (4) entraîné en rotation par l'actionneur électromécanique (11).

## Patentansprüche

1. Elektromechanischer Aktuator (11) für eine Schließ-, Verdunkelungs- oder Sonnenschutzanlage (6), wobei der elektromechanische Aktuator (11) eine Motorgruppe (16) mit einem Elektromotor (261) und einem Untersetzungsgetriebe (265), ein erstes mechanisches Schwingungsfiltermodul (33), ein zweites mechanisches Schwingungsfiltermodul (133) und eine Abtriebswelle (20) umfasst, die zumindest teilweise in ein Gehäuse (17) des elektromechanischen Aktuators (11) eingesetzt sind, wobei sich der elektromechanische Aktuator (11) entlang einer Längsachse (X) erstreckt, wobei das erste und das zweite mechanische Schwingungsfiltermodul (33, 133) auf beiden Seiten der Motorgruppe (16) entlang der Längsachse (X) angeordnet sind und jeweils eine starre Übertragungskupplung umfassen, die über mindestens einen ersten Freiheitsgrad senkrecht zur Längsachse (X) des elektromechanischen Aktuators (11) verfügt, der eine Bewegung der Motorgruppe (16) entlang einer zur Längsachse (X) des elektromechanischen Aktuators (11) senkrechten Ebene zulässt, wobei der elektromechanische Aktuator ferner mindestens ein elastisches Modul (130) umfasst, das die Bewegung der Motorgruppe (16) in der zur Längsachse (X) des elektromechanischen Aktuators (11) senkrechten Ebene begrenzt.

2. Elektromechanischer Aktuator (11) nach Anspruch 1, **dadurch gekennzeichnet, dass** das erste mechanische Schwingungsfiltermodul (33) Folgendes umfasst: ein erstes Eingangsteil (33a; 233a), das mechanisch direkt oder indirekt mit einer Drehmomentstütze (21) verbunden ist, insbesondere mit dem Gehäuse (17) verbunden ist, ein erstes Ausgangsteil (33b; 233b), das mechanisch direkt oder indirekt mit der Motorgruppe (16) verbunden ist, und ein erstes Zwischenteil (33i; 233i), das einerseits mit dem ersten Eingangsteil (33a; 233a) und andererseits mit dem ersten Ausgangsteil (33b; 233b) verbunden ist und über mindestens einen translatorischen Freiheitsgrad entlang einer zur Längsachse (X) senkrechten Richtung relativ zum ersten Eingangsteil (33a; 233a) verfügt und über mindestens einen translatorischen Freiheitsgrad in einer zur Längsachse (X) senkrechten Richtung relativ zum ersten Ausgangsteil (33b; 233b) verfügt, und dass das zweite mechanische Schwingungsfiltermodul (133) Folgendes umfasst: ein zweites Eingangsteil (133a; 333a), das mechanisch direkt oder indirekt mit einer Drehmomentstütze (21) verbunden ist, insbesondere mit dem Gehäuse (17) verbunden ist, ein zweites Ausgangsteil (133b; 333b), das mechanisch direkt oder indirekt mit der Motorgruppe (16) verbunden ist, und ein zweites Zwischenteil (133i; 333i), das einerseits mit dem zweiten Eingangsteil (133a; 333a) und andererseits mit dem zweiten Ausgangsteil (133b; 333b) verbunden ist und über mindestens einen translatorischen Freiheitsgrad in einer zur Längsachse (X) senkrechten Richtung relativ zum zweiten Eingangsteil (133a; 333a) verfügt und über mindestens einen translatorischen Freiheitsgrad in einer zur Längsachse (X) senkrechten Richtung relativ zum zweiten Ausgangsteil (133b; 333b) verfügt.

3. Elektromechanischer Aktuator (11) nach dem vorangehenden Anspruch, **dadurch gekennzeichnet, dass** das erste Ausgangsteil (33b; 233b) des ersten mechanischen Schwingungsfiltermoduls (33) eine äußere Schnittstelle (127) mit äußeren Rillen (127c) umfasst, die dazu geeignet ist, mit der Motorgruppe (16) verbunden zu sein, und/oder dass das zweite Eingangsteil (133a; 333a) des zweiten mechanischen Schwingungsfiltermoduls (133) eine innere Schnittstelle (128) mit inneren Rippen (128n) umfasst, die dazu geeignet ist, mit einer Abtriebswelle (16v) der Motorgruppe (16) verbunden zu sein.

4. Elektromechanischer Aktuator (11) nach einem der vorangehenden Ansprüche, **dadurch gekennzeichnet, dass** er, zumindest teilweise in das Gehäuse (17) des elektromechanischen Aktuators (11) eingesetzt, Folgendes umfasst:
- die Motorgruppe (16) mit dem Elektromotor (261) und dem Untersetzungsgetriebe (265),
- die Abtriebswelle (20) und
- mindestens das erste mechanische Schwingungsfiltermodul (33),
wobei sich der elektromechanische Aktuator (11) entlang der Längsachse (X) erstreckt, wobei das erste mechanische Schwingungsfiltermodul (33, 133) entlang der Längsachse (X) angeordnet ist und eine starre Übertragungskupplung umfasst, die über mindestens einen ersten Freiheitsgrad senkrecht zur Längsachse (X) des elektromechanischen Aktuators (11) verfügt, der eine Bewegung der Motorgruppe (16) in einer zur Längsachse (X) des elektromechanischen Aktuators (11) senkrechten Richtung zulässt, wobei das erste mechanische Filterschwingungsfiltermodul (33) Folgendes umfasst:
- ein Eingangsteil (33a),
- ein Ausgangsteil (33b),
- ein Zwischenteil (33i),
- eine erste Gleitverbindung (116) entlang einer ersten Achse (Y1) zwischen dem Zwischenteil und dem Eingangsteil,
- eine zweite Gleitverbindung (117) entlang einer zweiten Achse (Z1) zwischen dem Zwischenteil und dem Ausgangsteil, wobei die erste Achse (Y1) und die zweite Achse (Z1) senkrecht zu Längsachse (X) des elektromechanischen Aktuators (11) sind,
- erste Elemente (90a, 91a, 91i, 93a, 93i) zur Begrenzung der translatorischen Bewegungen des Eingangsteils relativ zum Zwischenteil entlang mindestens einer der ersten Achse (Y1) und der Längsachse (X) und/oder zweite Elemente (90b, 92b, 92i, 94b, 94i) zur Begrenzung der translatorischen Bewegungen des Ausgangsteils relativ zum Zwischenteil entlang mindestens einer der zweiten Achse (Z1) und der Längsachse (X).

5. Elektromechanischer Aktuator (11) nach dem vorangehenden Anspruch, **dadurch gekennzeichnet, dass** die ersten Bewegungsbegrenzungselemente Folgendes umfassen:
- erste Laschen (90a), die Teil des Eingangsteils oder des Zwischenteils sind, wobei sich die ersten Laschen im Wesentlichen entlang der Längsachse (X) erstrecken, und
- Anschlagflächen (91i, 93i), die jeweils Teil des Zwischenteils oder des Eingangsteils sind und insbesondere dazu bestimmt sind, durch Kontakt mit den ersten Laschen zusammenzuwirken, insbesondere dazu bestimmt sind, durch Kontakt mit den ersten Seiten (91a, 93a) der ersten Laschen zusammenzuwirken.

6. Elektromechanischer Aktuator (11) nach einem der Ansprüche 4 und 5, **dadurch gekennzeichnet, dass** die zweiten Bewegungsbegrenzungselemente Folgendes umfassen:
- zweite Laschen (90b), die Teil des Ausgangsteils oder des Zwischenteils sind, wobei sich die zweiten Laschen im Wesentlichen entlang der Längsachse (X) erstrecken, und
- Anschlagflächen (92i, 94i), die jeweils Teil des Zwischenteils oder des Ausgangsteils sind und insbesondere dazu bestimmt sind, durch Kontakt mit den zweiten Laschen zusammenzuwirken, insbesondere dazu bestimmt sind, durch Kontakt mit den zweiten Seiten (92b, 94b) der zweiten Laschen zusammenzuwirken.

7. Elektromechanischer Aktuator (11) nach einem der Ansprüche 5 und 6, **dadurch gekennzeichnet, dass** jede erste Lasche mindestens einen ersten flexiblen Teil (95a), insbesondere einen ersten flexiblen Arm (95a) oder zwei erste flexible Arme (95a), umfasst und/oder dass jede zweite Lasche mindestens einen zweiten flexiblen Teil (95b), insbesondere einen zweiten flexiblen Arm (95b) oder zwei zweite flexible Arme (95b), umfasst.

8. Elektromechanischer Aktuator (11) nach dem vorangehenden Anspruch, **dadurch gekennzeichnet, dass** jede erste Lasche mindestens eine erste geneigte Endfläche (96a) umfasst und/oder dass jede zweite Lasche mindestens eine zweite geneigte Endfläche (96a) umfasst.

9. Elektromechanischer Aktuator (11) nach einem der vorangehenden Ansprüche, **dadurch gekennzeichnet, dass** das zweite mechanische Schwingungsfiltermodul (133) Folgendes umfasst:
- ein Eingangsteil (133a),
- ein Ausgangsteil (133b),
- ein Zwischenteil (133i),
- eine erste Gleitverbindung (116) entlang einer ersten Achse (Y1) zwischen dem Zwischenteil und dem Eingangsteil,
- eine zweite Gleitverbindung (117) entlang einer zweiten Achse (Z1) zwischen dem Zwischenteil und dem Ausgangsteil, wobei die erste Achse (Y1) und die zweite Achse (Z1) senkrecht zur Längsachse (X) des elektromechanischen Aktuators (11) sind,
- erste Elemente (90a, 91a, 91i, 93a, 93i) zur Begrenzung der translatorischen Bewegungen des Eingangsteils relativ zum Zwischenteil entlang mindestens einer der ersten Achse (Y1) und der Längsachse (X) und/oder zweite Elemente (90b, 92b, 92i, 94b, 94i) zur Begrenzung der translatorischen Bewegungen des Ausgangsteils relativ zum Zwischenteil entlang mindestens einer der ersten Achse (Y1) und der Längsachse (X).

10. Elektromechanischer Aktuator nach einem der Ansprüche 4 bis 9, umfassend ferner ein Schwingungsabsorptionsmodul (130) und eine Drehmomentstütze (21), die zumindest teilweise in das Gehäuse (17) eingesetzt sind,
- wobei das Eingangsteil (33a) des ersten mechanischen Schwingungsfiltermoduls (33) mechanisch direkt oder indirekt mit dem Gehäuse (17) verbunden ist,
- wobei das Ausgangsteil (33b) des ersten mechanischen Schwingungsfiltermoduls (33) mechanisch mit der Drehmomentstütze (21) verbunden ist, wobei das mechanische Schwingungsfiltermodul (33) die mechanische Verbindung zwischen dem Gehäuse (17) und der Drehmomentstütze in Rotation um die Längsachse (X) des Aktuators sicherstellt, wobei das Schwingungsabsorptionsmodul das Gehäuse (17) mechanisch mit der Drehmomentstütze (21) in Translation senkrecht zur Längsachse (X) des Aktuators verbindet und dabei einen Freiheitsgrad in Rotation zwischen dem Gehäuse (17) und der Drehmomentstütze (21) um die Längsachse (X) zulässt.

11. Elektromechanischer Aktuator (11) nach dem vorangehenden Anspruch, **dadurch gekennzeichnet, dass** das Schwingungsabsorptionsmodul (130) einen ersten Ring (131) aus weichem Material, insbesondere aus elastomerem und/oder viskoelastischem Material, der um einen Teil (210) der Drehmomentstütze (21) herum angeordnet ist, und einen zweiten Ring (132) aus starrem Material, der um den ersten Ring (131) herum angeordnet oder in den ersten Ring (131) eingesetzt ist, umfasst.

12. Haustechnische Schließ-, Verdunkelungs- oder Sonnenschutzanlage (6) mit einem Schirm (2), einem Aufwickelrohr (4) und einem elektromechanischen Aktuator (11) nach einem der vorangehenden Ansprüche, wobei der Schirm (2) auf das Aufwickelrohr (4), das durch den elektromechanischen Aktuator (11) in Rotation angetrieben wird, aufwickelbar ist.

## Claims

1. An electromechanical actuator (11) for a closure, privacy or solar protection installation (6), the electromechanical actuator (11) comprising a motor assembly (16), comprising an electric motor (261) and a reduction gear (265), a first mechanical vibration filtering module (33), a second mechanical vibration filtering module (133) and an output shaft (20), inserted at least partially into a casing (17) of the electromechanical actuator (11), the electromechanical actuator (11) extending along a longitudinal axis (X), the first and the second mechanical vibration filtering modules (33, 133) being disposed on either side of the motor assembly (16) along the longitudinal axis (X) and each comprising a rigid transmission coupling, having at least a first degree of freedom perpendicularly to the longitudinal axis (X) of the electromechanical actuator (11), allowing a displacement of the motor assembly (16) on a plane perpendicular to the longitudinal axis (X) of the electromechanical actuator (11), the electromechanical actuator further comprising at least one elastic module (130) limiting the displacement of the motor assembly (16) on the plane perpendicular to the longitudinal axis (X) of the electromechanical actuator (11).

2. The electromechanical actuator (11) as claimed in claim 1, **characterized in that** the first mechanical vibration filtering module (33) comprises a first input piece (33a; 233a) mechanically linked directly or indirectly to a torque support (21), in particular linked to the casing (17), a first output piece (33b; 233b) mechanically linked directly or indirectly to the motor assembly (16) and a first intermediate piece (33i; 233i) linked on one side to the first input piece (33a; 233a) and on the other side to the first output piece (33b; 233b) and having at least one degree of freedom in translation in a direction perpendicular to the longitudinal axis (X) with respect to the first input piece (33a; 233a) and having at least one degree of freedom in translation in a direction perpendicular to the longitudinal axis (X) with respect to the first output piece (33b; 233b) and **in that** the second mechanical vibration filtering module (133) comprises a second input piece (133a; 333a) mechanically linked directly or indirectly to a torque support (21), in particular linked to the casing (17), a second output piece (133b; 333b) mechanically linked directly or indirectly to the motor assembly (16) and a second intermediate piece (133i; 333i) linked on one side to the second input piece (133a; 333a) and on the other side to the second output piece (133b; 333b) and having at least one degree of freedom in translation in a direction perpendicular to the longitudinal axis (X) with respect to the second input piece (133a; 333a) and having at least one degree of freedom in translation in a direction perpendicular to the longitudinal axis (X) with respect to the second output piece (133b; 333b).

3. The electromechanical actuator (11) as claimed in the preceding claim, **characterized in that** the first output piece (33b; 233b) of the first mechanical vibration filtering module (33) comprises an external interface (127), comprising external splines (127c), designed to be connected to the motor assembly (16) and/or **in that** the second input piece (133a; 333a) of the second mechanical vibration filtering module (133) comprises an internal interface (128), provided with internal ribs (128n), designed to be connected to an output shaft (16v) of the motor assembly (16).

4. The electromechanical actuator (11) as claimed in one of the preceding claims, **characterized in that** it comprises, inserted at least partially into the casing (17) of the electromechanical actuator (11):
- the motor assembly (16), comprising the electric motor (261) and the reduction gear (265),
- the output shaft (20), and
- at least the first mechanical vibration filtering module (33), the electromechanical actuator (11) extending along the longitudinal axis (X), the first mechanical vibration filtering module (33, 133) being disposed along the longitudinal axis (X) and comprising a rigid transmission coupling, having at least one first degree of freedom perpendicular to the longitudinal axis (X) of the electromechanical actuator (11), allowing a displacement of the motor assembly (16) on a plane perpendicularly to the longitudinal axis (X) of the electromechanical actuator (11), the first mechanical vibration filtering module (33) comprising:
- an input piece (33a),
- an output piece (33b),
- an intermediate piece (33i),
- a first slide link (116), on a first axis (Y1), between the intermediate piece and the input piece,
- a second slide link (117), on a second axis (Z1), between the intermediate piece and the output piece, the first axis (Y1) and the second axis (Z1) being perpendicular to the longitudinal axis (X) of the electromechanical actuator (11),
- first elements (90a, 91a, 91i, 93a, 93i) for limiting displacements, in translation on at least one of the first axis (Y1) and the longitudinal axis (X), of the input piece relatively to the intermediate piece, and/or second elements (90b, 92b, 92i, 94b, 94i) for limiting displacements, in translation on at least one of the second axis (Z1) and the longitudinal axis (X), of the output piece relatively to the intermediate piece.

5. The electromechanical actuator (11) as claimed in the preceding claim, **characterized in that** the first displacement-limiting elements comprise:
- first tongues (90a) forming part of the input piece or of the intermediate piece, the first tongues extending mainly along the longitudinal axis (X), and
- abutment surfaces (91i, 93i) forming part respectively of the intermediate piece or of the input piece, notably intended to cooperate by contact with the first tongues, in particular intended to cooperate by contact with first faces (91a, 93a) of the first tongues.

6. The electromechanical actuator (11) as claimed in one of claims 4 and 5, **characterized in that** the second displacement-limiting elements comprise:
- second tongues (90b) forming part of the output piece or of the intermediate piece, the second tongues extending mainly on the longitudinal axis (X), and
- abutment surfaces (92i, 94i) forming part respectively of the intermediate piece or of the output piece, notably intended to cooperate by contact with the second tongues, in particular intended to cooperate by contact with second faces (92b, 94b) of the second tongues.

7. The electromechanical actuator (11) as claimed in one of claims 5 and 6, **characterized in that** each first tongue comprises at least one first flexible part (95a), notably a first flexible arm (95a) or two first flexible arms (95a) and/or **in that** each second tongue comprises at least one second flexible part (95b), notably a second flexible arm (95b) or two second flexible arms (95b).

8. The electromechanical actuator (11) as claimed in the preceding claim, **characterized in that** each first tongue comprises at least one first inclined end face (96a) and/or **in that** each second tongue comprises at least one second inclined end face (96a).

9. The electromechanical actuator (11) as claimed in one of the preceding claims, **characterized in that** the second mechanical vibration filtering module (133) comprises
- an input piece (133a),
- an output piece (133b),
- an intermediate piece (133i),
- a first slide link (116), on a first axis (Y1), between the intermediate piece and the input piece,
- a second slide link (117), on a second axis (Z1), between the intermediate piece and the output piece, the first axis (Y1) and the second axis (Z1) being perpendicular to the longitudinal axis (X) of the electromechanical actuator (11),
- first elements (90a, 91a, 91i, 93a, 93i) for limiting displacements, in translation along at least one of the first axis (Y1) and the longitudinal axis (X), of the input piece relatively to the intermediate piece, and/or second elements (90b, 92b, 92i, 94b, 94i) for limiting displacements, in translation on at least one of the first axis (Y1) and the longitudinal axis (X), of the output piece relatively to the intermediate piece.

10. The electromechanical actuator as claimed in one of claims 4 to 9, further comprising a vibration absorption module (130) and a torque support (21), inserted at least partially into the casing (17),
- the input piece (33a) of the first mechanical vibration filtering module (33) being mechanically linked directly or indirectly to the casing (17),
- the output piece (33b) of the first mechanical vibration filtering module (33) being mechanically linked to the torque support (21),
the mechanical vibration filtering module (33) ensuring the mechanical link between the casing (17) and the torque support in rotation about the longitudinal axis (X) of the actuator, the vibration absorption module mechanically linking the casing (17) to the torque support (21) in translation perpendicularly to the longitudinal axis (X) of the actuator by allowing a degree of freedom in rotation between the casing (17) and the torque support (21) about the longitudinal axis (X).

11. The electromechanical actuator as claimed in the preceding claim, **characterized in that** the vibration absorption module (130) comprises a first bushing (131) made of flexible material, notably of elastomer and/or viscoelastic material, disposed around a part (210) of the torque support (21) and a second bushing (132) made of rigid material, disposed around the first bushing (131) or inserted into the first bushing (131).

12. A closure, privacy or solar protection home-automation installation (6) comprising a screen (2), a winding tube (4) and an electromechanical actuator (11) as claimed in any one of the preceding claims, the screen (2) being able to be wound onto the winding tube (4) driven in rotation by the electromechanical actuator (11).
